(19) Europäisches Patentamt
European Patent Office
Office européen des brevets

(11) **EP 4 316 766 B1**

(12) **EUROPEAN PATENT SPECIFICATION**

(45) Date of publication and mention
of the grant of the patent:
**26.11.2025 Bulletin 2025/48**

(21) Application number: **22780802.9**

(22) Date of filing: **28.03.2022**

(51) International Patent Classification (IPC):
**B29B 7/72** *(2006.01)*    **B29B 7/48** *(2006.01)*
**B29B 7/66** *(2006.01)*    **B29B 7/88** *(2006.01)*
**B29B 7/90** *(2006.01)*    **B29B 9/06** *(2006.01)*
**B29B 9/12** *(2006.01)*    **B29B 9/14** *(2006.01)*
**B29B 15/08** *(2006.01)*

(52) Cooperative Patent Classification (CPC):
**B29B 9/12; B29B 7/726; B29B 7/885; B29B 7/905;
B29B 9/14;** B29B 7/48; B29B 7/66; B29B 9/06

(86) International application number:
**PCT/JP2022/015146**

(87) International publication number:
**WO 2022/210591 (06.10.2022 Gazette 2022/40)**

(54) **SPINDLE-SHAPED CARBON FIBER-CONTAINING AGGREGATE, MANUFACTURING METHOD FOR SAME**

SPINDELFÖRMIGES KOHLENSTOFFFASERHALTIGES AGGREGAT, HERSTELLUNGSVERFAHREN DAFÜR

AGRÉGAT CONTENANT DES FIBRES DE CARBONE, EN FORME DE FUSEAU, PROCÉDÉ DE FABRICATION DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2021   JP 2021060703
28.04.2021   JP 2021076821**

(43) Date of publication of application:
**07.02.2024 Bulletin 2024/06**

(73) Proprietor: **Teijin Limited
Osaka-shi, Osaka 530-0005 (JP)**

(72) Inventor: **NYUI, Shingo
Osaka-shi, Osaka 530-0005 (JP)**

(74) Representative: **Carpmaels & Ransford LLP
One Southampton Row
London WC1B 5HA (GB)**

(56) References cited:
**EP-A1- 2 902 433        EP-A1- 3 466 630
WO-A1-2009/072651   WO-A1-2022/050281
CA-A1- 2 756 411       JP-A- 2015 081 262
JP-A- 2017 002 125    JP-A- 2019 189 674
JP-A- 2020 196 882    JP-A- 2020 515 658
JP-A- 2020 515 658    JP-B2- 3 452 363
JP-B2- 3 452 363        US-A1- 2019 112 228**

**Description**

Technical Field

The present disclosure relates to a spindle-shaped aggregate containing carbon fibers and a method for manufacturing the same. In particular, the present disclosure relates to a spindle-shaped carbon fiber aggregate having excellent feedability and which is produced from a regenerated carbon fiber (a recycled carbon fiber), and a method for manufacturing the same.

The present disclosure relates to a method for producing a spindle-shaped aggregate according to claim 1 and a spindle-shaped carbon fiber aggregate according to claim 8.

Background Art

Carbon fibers have excellent specific strength and specific elastic modulus and are lightweight, and therefore are used as reinforcing fibers, etc., for thermosetting resins and thermoplastic resins (in particular, for thermoplastic resins). A carbon-fiber-reinforced resin composite (also referred to as a carbon-fiber-reinforced plastic and CFRP) is used in a wide range of applications, such as aerospace applications and automobile applications, as well as sporting and general industrial applications.

For a carbon fiber serving as a raw material of a carbon-fiber-containing product such as a carbon-fiber-reinforced resin composite, studies have been conducted for a granulation method to form a granular carbon fiber aggregate from carbon fibers and a binder, etc. When producing a carbon-fiber-containing product by extrusion molding, etc., such carbon fiber aggregate can exhibit better feedability as compared with a case where a carbon fiber is used as it is.

Patent Document 1 describes a method for producing a carbon fiber pellet in which an aggregate of carbon fibers bonded with a sizing agent is brought into contact with an inclined rotating surface.

In recent years, there has been increasing demand for a regenerated carbon fiber (a recycled carbon fiber) recovered from a used carbon-fiber-containing product, etc. For such a regenerated carbon fiber, a granulating method for forming a carbon fiber aggregate has also been studied.

Patent Document 2 describes a method for producing a carbon fiber pellet from a regenerated carbon fiber using a mixer having an inclined rotating container.

Patent Documents 3 and 4 describe a method for producing a cylinder-shaped carbon fiber aggregate from a regenerated carbon fiber by a wet extrusion granulation method.

Patent Document 4a relates to a macro-cement and associated methods useful for preparing pastes, mortars, concretes and other cement-based materials having high workability, high density, and high strength. A method of producing a macro-cement includes cement, supplemental cementitious materials (SCM's), including siliceous submicron-sized particles and nano-sized particles, and polymers in the form of liquid or dry chemical admixtures for concrete. The cement mixture may be used for making ultra-high performance concrete (UHPC).

A carbon-fiber-reinforced thermoplastic resin pellet is a form of a carbon-fiber-reinforced resin composite material. There are two types of the carbon-fiber-reinforced thermoplastic resin pellet: a long-fiber-reinforced pellet produced by cutting a resin strand which is obtained by coating a continuous carbon fiber with a thermoplastic resin; and a short-fiber-reinforced pellet produced by cutting a resin strand obtained by kneading and dispersing discontinuous carbon fibers into a thermoplastic resin. As compared with the long-fiber-reinforced thermoplastic resin pellet, the short-fiber-reinforced thermoplastic resin pellet is widely used as a method of low cost production even though mechanical properties are inferior.

Patent Document 5 and Patent Document 6 describe methods for producing a regenerated-carbon-fiber-containing composite from a carbon fiber by melt-kneading. The carbon fiber used in this method is recovered from a waste material of a carbon-fiber-reinforced resin composite material by a thermal decomposition method, wherein a residual carbon derived from a carbonized matrix component is adhered thereto.

Patent Document 7 describes a carbon fiber aggregate, wherein the feedability thereof is improved by adding a fiber treatment agent to a regenerated carbon fiber recovered from a carbon-fiber-reinforced composite material and by shaping it into a cylindrical shape using an extrusion granulator.

Citation List

Patent Literature

[Patent Document 1] Patent No. 3452363

[Patent Document 2] European Patent Application Publication No. 2902433
[Patent Document 3] JP 2020-180421A
[Patent Document 4] JP 2020-196882A
[Patent Document 4a] US2019112228A1
[Patent Document 5] JP 2020-49820A
[Patent Document 6] JP 2019-155634A
[Patent Document 7] JP 2021-55198A

Summary of Invention

Technical Problem

There are cases where a conventional carbon fiber aggregate exhibits insufficient feedability.

An object of the invention according to the present disclosure is to provide a carbon fiber aggregate exhibiting improved feedability.

In general, when a carbon-fiber-containing molded article is produced using a carbon fiber aggregate as described above, a thermoplastic resin is supplied to a kneading machine, etc., together with a carbon fiber aggregate (primary intermediate material), and then kneading is performed to produce a pellet (secondary intermediate material) comprising carbon fibers and a thermoplastic resin. Then, the pellet is supplied to an injection molding machine, etc., to produce a carbon-fiber-containing molded article.

However, during the manufacture of the secondary intermediate material, there were cases where the carbon fibers were broken. Further, if it is possible to add the thermoplastic resin to the carbon fiber aggregate in advance, the kneading step for producing the secondary intermediate material can be omitted, making it possible to directly manufacture the molded article using the aggregate of carbon fibers and thermoplastic resin. However, it was not easy to include a thermoplastic resin into a carbon fiber aggregate while maintaining the handling property of the aggregate.

Solution to Problem

(Invention 1)

According to the following embodiments according to Invention 1 of the present disclosure, it is possible to solve the above problem of invention 1:

<Embodiment 1>

A method for producing a spindle-shaped aggregate according to claim 1.

<Embodiment 2>

A spindle-shaped aggregate (assembly) according to claim 8.

Advantageous Effects of Invention

According to the invention of the present disclosure, it is possible to provide a carbon fiber aggregate exhibiting improved feedability.

Brief Description of Drawings

[Fig. 1] FIG. 1 is a schematic diagram of one embodiment of a stirring granulator (tumbling granulator) which can be used in the present disclosure.

[Fig. 2] FIG. 2 is a conceptual cross-section diagram for explaining a decomposition method according to Invention 2 of the present disclosure.

[Fig. 3] FIG. 3 is a schematic cross-sectional view showing one embodiment of the decomposition method according to Invention 2 of the present disclosure.

[Fig. 4] FIG. 4 is a photograph of a plurality of carbon fiber aggregates according to Example A1.

[Fig. 5] FIG. 5 is a photograph of a carbon fiber aggregate according to Example A1.

[Fig. 6] FIG. 6 is a photograph of a carbon fiber aggregate obtained in Comparative Example A2.

[Fig. 7] FIG. 7 is a photograph of a plurality of aggregates according to Example B2.

[Fig. 8] FIG. 8 is a photograph of an aggregate according to Example B2.

[Fig. 9] FIG. 9 is a photograph showing a material obtained in Comparative Example B1.

[Fig. 10] FIG. 10 is a photograph of a CFRP plate prior to heat treatment.

[Fig. 11] FIG. 11 is a photograph of a CFRP plate undergone the process according to Reference Example 4.

[Fig. 12] FIG. 12 is a photograph of CFRP plate undergone the process according to Reference Comparative Example 2.

Description of Embodiments

(Invention 1)

A method for producing a spindle-shaped aggregate according to Invention 1 of the present disclosure comprise:

providing a mixture at least composed of carbon fibers and a binder-containing liquid,
preparing a spindle-shaped precursor by making the mixture tumble in a container; and
drying the precursor.

Further, Invention 1 of the present disclosure comprises:
a spindle-shaped aggregate comprising carbon fibers and a binder.
The aggregate according to Invention 1 of the present disclosure comprises carbon fibers and a binder and has a spindle shape. When an aggregate comprising carbon fibers has a spindle shape, it is considered that the flow characteristics of the carbon fiber aggregate are improved due to the reduction of the contact resistance, and as a result, the feedability can be improved. In the present disclosure, "spindle-shape" means a shape having the thick central portion and gradually tapering off toward both ends.
The spindle-shaped aggregate (the spindle-shaped carbon-fiber-containing aggregate) according to Invention 1 of the present disclosure is, in particular, a spindle-shaped carbon fiber aggregate or a spindle-shaped aggregate of thermoplastic resin fibers and carbon fibers.
With respect to the aggregate according to Invention 1, the manufacturing method thereof, as well as the constituent elements and specific aspects thereof, reference may be made to the following descriptions of Invention 1a and Invention 1b.

(Invention 1a)

A method for producing a carbon fiber aggregate according to Invention 1a of the present disclosure comprises:

providing a mixture at least composed of regenerated carbon fibers and a binder-containing liquid (a step of provision),
making the mixture tumble in a container in a clearance between the inner wall of the container and the rotating body in the container, in order to prepare a spindle-shaped precursor (a step of granulation), and
drying the precursor (a step of drying), wherein the method is characterized in that:

the regenerated carbon fibers contain a residual carbon component, and the content of the residual carbon component is more than 0% by weight and 5.0% by weight or less, based on the regenerated carbon fibers; and
the average length of the regenerated carbon fibers is 1 mm or more and less than 30 mm.

In general, when a carbon-fiber-containing article is molded, the carbon fibers can be supplied to an extruder, etc., using a feeder, and in particular, can be quantitatively supplied using a quantitative feeder. For the stable production of a molded article with high accuracy, it is important to stably supply carbon fibers.

Such feedability (feeding characteristics) of carbon fibers can be improved by mixing and granulating carbon fibers and a sizing agent, etc., so as to form a carbon fiber aggregate having a specific shape. For example, it is considered that by shaping a carbon fiber aggregate into a granular spindle shape having low contact resistance, the flow characteristics of the carbon fiber aggregate is improved, and as a result, the feedability can be improved.

However, when such a carbon fiber aggregate is produced using a regenerated carbon fiber as a raw material, it is not easy to obtain a spindle shape having excellent feedability.

In other words, since a regenerated carbon fiber is usually obtained by thermally decomposing a carbon-fiber-reinforced resin composite material, it contains a certain amount of residual carbon derived from a resin material, and therefore fibers are relatively firmly bonded to each other. Without wishing to be bound by theory, it is believed that since it is not easy to loosen this bonded state under the stress applied in the granulator (in particular a rotation agitator), the binder-containing liquid cannot penetrate between the fibers, and as a result, it is not possible to obtain a carbon fiber aggregate having the spindle shape.

On the other hand, in the method according to Invention 1a of the present disclosure, a regenerated carbon fiber having a residual carbon content of 5% by weight or less is used as a raw material of a carbon fiber aggregate. Without wishing to be bound by theory, it is believed that for such a regenerated carbon fiber, the fibers are relatively weakly bonded to each other (or unbonded) such that the binder-containing liquid easily penetrates between the fibers under the stress applied from a granulator, etc. In this case, it is possible to obtain a spindle-shaped carbon fiber aggregate having excellent flow characteristics.

The length of the regenerated carbon fibers as a raw material may also affect the feedability. In other words, it is believed that when the average length of the regenerated carbon fiber serving as raw materials is too short, it is not easy for fibers to orient along one direction, and it is difficult to obtain a carbon fiber aggregate having a spindle shape. Further, it is believed that even when the average length of the regenerated carbon fiber is too long, uniform orientation of the fibers is not easy since the fibers are entangled with each other.

On the other hand, in the method according to Invention 1a of the present disclosure, it is believed that since the average length of the regenerated carbon fiber is 1 mm or more and less than 30 mm, uniform orientation of fibers is facilitated.

As described above, according to the production method of Invention 1a of the present disclosure, a carbon fiber aggregate having excellent feedability can be obtained. The carbon fiber aggregate produced by the production method according to Invention 1a of the present disclosure has a granular spindle-shape having good flow properties, and thus when supplied to a quantitative feeder, the carbon fiber aggregate can be stably quantitatively supplied without clogging the quantitative feeder.

<Carbon fiber aggregate>

The spindle-shaped carbon fiber aggregate produced by Invention 1a of the present disclosure is an aggregate at least composed of regenerated carbon fibers and a binder. Preferably, the carbon fiber aggregate consists substantially of regenerated carbon fibers and a binder. In the carbon fiber aggregate, the regenerated carbon fibers are bonded to each other by the binder.

The amount of the binder in the carbon fiber aggregate is preferably from 0.1% by weight to 10% by weight, in particular may be from 0.5% by weight to 8% by weight, or from 1% by weight to 6% by weight, based on the carbon fiber aggregate.

The carbon fiber aggregate obtained by the method according to Invention 1a of the present disclosure has a spindle-shape. A carbon fiber aggregate having a spindle shape exhibits good feedability. Without wishing to be bound by theory, it is believed that a carbon fiber aggregate having a spindle shape have a relatively low contact resistance, and as a result, they can flow through the feeder relatively smoothly without clogging the feeder.

Orientation of fiber

In the carbon fiber aggregate obtained by the method according to Invention 1a of the present disclosure, the regenerated carbon fibers are preferably oriented along the longitudinal axis of the spindle-shaped aggregate. This orientation of the regenerated carbon fibers need not be identical (i.e., parallel) to the longitudinal axis of the carbon fiber aggregate, but is preferably substantially parallel, and more specifically, the average extending direction of the regenerated carbon fibers has an angle of 45° or less, 40° or less, 30° or less, 20° or less, 10° or less, 5° or less, 2° or less, 1° or less, 0.5° or less, or 0.1° or less with respect to the longitudinal axis of the carbon fiber aggregate. The average extending direction of the regenerated carbon fibers with respect to the longitudinal axis of the carbon fiber aggregate is preferably as close to 0°, and the lower limit thereof is not particularly limited, but may be, for example, greater than 0°, or greater than or equal to 0.01°.

The average extending direction of the fibers in the carbon fiber aggregate can be determined using a digital camera or an optical microscope, etc., in a cross section parallel to the longitudinal axis of the carbon fiber aggregate.

Average length

The average length of the carbon fiber aggregate may be from 1.5 mm to 60 mm. Preferably, the average length of the carbon fiber aggregate is, 1.8 mm or more, 2 mm or more, 3 mm or more, 4 mm or more, 5 mm or more, 6 mm or more, 7 mm or more, 8 mm or more, 9 mm or more, 10 mm or more, 11 mm or more, or 12 mm or more, and/or 50 mm or less, 40 mm or less, 30 mm or less, or 25mm or less. When the average length of the carbon fiber aggregate is within the above range, good feedability can be obtained.

The average length of the carbon fiber aggregate can be calculated by measuring the length of the 50 carbon fiber aggregates in the longitudinal axis thereof, visually using a caliper, etc., or in an image obtained using a digital camera or an optical microscope, etc., and by averaging the measured values.

Preferably, the average length of the carbon fiber aggregate is 1.2 to 4.0 times the average length of the regenerated carbon fibers.

Particularly preferably, the average length of the carbon fiber aggregate is 1.4 times or more, 1.5 times or more, or 1.6 times or more, and/or 3.5 times or less, or 3.0 times or less the average length of the regenerated carbon fibers. When the average length of the carbon fiber aggregate is within the above range, particularly good feedability can be obtained.

Average maximum width of the aggregate

The average maximum width of the carbon fiber aggregate may be from 0.1 mm to 3.0 mm. Preferably, the average length of the aggregate is 0.2 mm or more, 0.3 mm or more, 0.4 mm or more, or 0.5 mm or more, and/or 2.5 mm or less, 2.0 mm or less, 1.8 mm or less, or 1.6 mm or less. The average maximum width of the carbon fiber aggregate is an average of the largest length (width) in a direction perpendicular to the longitudinal axis. When the average maximum width of the carbon fiber aggregate is within the above range, good feedability can be obtained.

The average maximum width of the carbon fiber aggregate can be calculated by measuring the maximum length of the 50 carbon fiber aggregates in the minor axis , visually using a caliper, etc., or in an image obtained by using a digital camera or an optical microscope, etc., and by averaging the measured values.

Aspect Ratio

The aspect ratio of the carbon fiber aggregate may be from 2 to 150, from 2 to 100, or from 2 to 50. The aspect ratio of the carbon fiber aggregate is preferably from 2 to 20, or from 3 to 15, or in particular from 4 to 10. When the aspect ratio is in said range (particularly in said preferred range), a carbon fiber aggregate having particularly excellent shape stability and feedability may be obtained.

The aspect ratio is a value obtained by dividing the major axis of the spindle-shaped carbon fiber aggregate by the minor axis; i.e., the major axis/minor axis. As the degree of elongation increases, the aspect ratio increases.

The aspect ratio can be obtained by measuring the major axis and minor axis of the carbon fiber aggregate, visually using a caliper, etc., or using a digital camera or an optical microscope, etc., and by calculating the major axis/minor axis. Note that the largest length (width) in a direction perpendicular to the direction of the major axis can be used as the "minor axis".

Provision step

In the method according to Invention 1a of the present disclosure, a mixture is provided which is at least composed of regenerated carbon fibers and a binder-containing liquid.

The amount of the binder-containing liquid in the mixture is preferably from 20% to 60% by weight, particularly preferably from 25% to 55% by weight, or from 30% to 50% by weight. In this case, the regenerated carbon fibers are bundled particularly well due to the liquid contained in the binder. Further, in this case, the load of the drying process can be reduced since the amount of the liquid contained in the binder does not become excessive. The binder-containing liquid contains a solvent or a dispersion medium. Preferably, the content of the solvent or dispersion medium (in particular water) in the mixture is from 20% to 60% by weight, in particular from 25% to 55% by weight, or from 30% to 50% by weight. More preferably, the content of the solvent or dispersion medium (in particular water) in the mixture is from 20% to 45% by weight, from 20% to 40% by weight, or from 20% to 30% by weight. When the content of the solvent or dispersion medium (especially water) is relatively low as the above range, the load for drying can be reduced particularly effectively.

Regenerated carbon fiber

The regenerated carbon fiber is a raw material of a carbon fiber aggregate, and comprises a carbon fiber component and a residual carbon component. Typically, in the regenerated carbon fiber, the residual carbon component is attached to the surface of the carbon fiber component.

The regenerated carbon fiber is not particularly limited, and it may be, for example, a regenerated carbon fiber obtained by heat-treating a carbon-fiber-containing plastic article such as a carbon-fiber-reinforced plastic (CFRP). The regenerated carbon fiber may be a regenerated carbon fiber described below with respect to Invention 2.

Particularly preferably, the regenerated carbon fiber is a regenerated carbon fiber obtained by the thermal activation of semiconductors method. In other words, a particularly preferred embodiment of the method according to the present disclosure comprises decomposing a plastic component contained in a carbon-fiber-containing plastic article by the thermal activation of semiconductors method so as to produce a regenerated carbon fiber.

The "Thermal Activation of Semi-Conductors method" (TASC method) is a method of decomposing a compound to be decomposed, such as a polymer, by using a thermal activation of semiconductors (Thermal Activation of Semi-Conductors, TASC). For a method of producing a regenerated carbon fiber by decomposing a plastic component contained in a carbon-fiber-containing plastic article by the thermal activation of semiconductors method, mention may be made for example of the description of Japanese Patent No. 4517146 and Japanese patent publication JP2019-189674. As for a method for producing a regenerated carbon fiber by the thermal activation of semiconductors method, reference can also be made to the description of Invention 2 of the present disclosure below.

Carbon fiber component

The carbon fiber component in the regenerated carbon fiber is usually derived from a carbon fiber contained in a carbon-fiber-containing article, etc., used as a raw material for the regenerated carbon fiber. The carbon fiber component in the regenerated carbon fiber may have been modified by being subjected to a heat treatment, etc., during the process of producing the regenerated carbon fiber.

The carbon fiber component in the regenerated carbon fiber may be, for example, a PAN-based carbon fiber or a pitch-based carbon fiber.

The form of the carbon fiber component in the regenerated carbon fiber is not particularly limited, but may be a form of a carbon fiber bundle composed of a plurality of single fiber (i.e., single fibers or filaments). The number of filaments constituting the carbon fiber bundle may range from 1,000 to 80,000, or from 3,000 to 50,000. In addition, the diameter of the filament constituting the carbon fiber component in the regenerated carbon fiber may be 0.1 $\mu$m to 30$\mu$m, 1 $\mu$m to 10 $\mu$m, or 3 $\mu$m to 8 $\mu$m.

Residual carbon component

The residual carbon component contained in the regenerated carbon fiber is, in particular, a residual carbon derived from a resin contained in a carbon-fiber-containing plastic article used as a raw material in the production of the regenerated carbon fiber.

In the method according to Invention 1a of the present disclosure, the residual carbon component is more than 0 % by weight and 5.0 % by weight or less with respect to the regenerated carbon fibers. In this case, a carbon fiber aggregate with improved feedability can be obtained.

Further, when the residual carbon component is more than 0% by weight and 5.0% by weight or less, it is possible to avoid contamination caused by a relatively large amount of carbon components (in particular, charcoal), and it is possible to reduce the carbon component which can become a foreign substance when producing a carbon-fiber-containing article, etc., using a carbon fiber aggregate as a material, and it is possible to improve the uniform distribution of the fibers in the carbon-fiber-containing article.

Preferably, the residual carbon component is 4.0 % by weight or less, 3.0 % by weight or less, or 2.0 % by weight or less, based on the regenerated carbon fibers. The residual carbon component is preferably reduced as much as possible, but may be 0.1% by weight or more, 0.2% by weight or more, 0.4% by weight or more, 0.6% by weight or more, 0.8% by weight or more, 1.0% by weight or more, or 1.2% by weight or more, with respect to the regenerated carbon fibers.

The content of the residual carbon component in the regenerated carbon fibers can be measured by thermogravimetric analysis (TGA method).

The measurement of the residual carbon component by thermogravimetric analysis can be performed by the following procedure:

(i) For 1 to 4 mg samples obtained by pulverizing regenerated carbon fibers, thermogravimetric analysis was performed for a period of 300 minutes in total, using a thermogravimetric analyzer, under the condition of the air-feed rate of 0.2 L/min, the rate of heating at 5°C./min, and recording rate of 1/6 s, wherein the analysis comprised the following steps:

increasing the temperature from room temperature to 100°C,
holding the temperature at 100°C. for 30 minutes,
increasing the temperature from 100°C. to 400°C., and
holding the temperature at 400°C.,

(ii) in a graph in which the weight loss rate is plotted with respect to time, the inflection point of the slope is specified, and the residual carbon amount is calculated by subtracting the weight loss rate in the holding period at 100°C. from the weight loss rate at said inflection point.

If the inflection point of the slope cannot be identified under the above measurement condition, thermogravimetric analysis for a total of about 600 minutes having a step of holding the temperature at 400°C. for 480 minutes may be performed, instead of thermogravimetric analysis for a total of 300 minutes; further, instead of holding the temperature at 400°C. for 480 minutes, it is possible to hold the temperature at a specific temperature in the range of greater than 400°C. and less than or equal to 500°C. for 480 minutes.

In addition, when the regenerated carbon fiber contains a resin derived from a sizing treatment, etc., the resin may be removed before measuring the residual carbon component according to the above-described method.

Average length

The regenerated carbon fibers have an average length greater than or equal to 1 mm and less than 30 mm. The regenerated carbon fiber having a length in this range can be obtained, for example, by cutting a regenerated carbon fiber having longer dimensions. The average length of the regenerated carbon fibers may be 2 mm or more, 3 mm or more, or 4 mm or more, and/or 29 mm or less, 28 mm or less, 27 mm or less, 26 mm or less, 25 mm or less, 24 mm or less, 23 mm or less, 22 mm or less, 21 mm or less, 20 mm or less, 15 mm or less or 10 mm or less. In particular, the average length of the regenerated carbon fibers may also be from 8 mm to 25 mm, or from 9 mm to 20 mm.

In a preferred embodiment of Invention 1a of the present disclosure, the average length of the regenerated carbon fibers is 2 mm or more and 20 mm or less, and in particular 3 mm or more and 15 mm or less. In this case, particularly good feedability can be obtained.

Further, in an embodiment of Invention 1a of the present disclosure, the average length of the regenerated carbon fibers is more than 6 mm and less than 30 mm, and in particular 8 mm or more and 25 mm or less. In this case, when a carbon-fiber-containing article is produced using the carbon fiber aggregate, a carbon-fiber-containing article having particularly excellent physical properties, such as particularly excellent strength, may be obtained.

The average length of the regenerated carbon fibers can be calculated by measuring the lengths of 50 regenerated carbon fibers, visually using a caliper, etc., or in an image acquired by a digital camera or an optical microscope, etc., and by averaging the measured values.

Binder-containing liquid

The binder-containing liquid is a binder dispersion liquid or a binder solution, and contains a binder and a solvent or a dispersion medium.

Binder

The binder serves to bound the regenerated carbon fibers in the carbon fiber aggregate and to retain the shape of the carbon fiber aggregate. The binder is not particularly limited, but is preferably a thermoplastic resin or a thermosetting resin. More specifically, the example thereof includes epoxy resins, urethane-modified epoxy resins, polyester resins, phenol resins, polyamide resins, polyurethane resins, polycarbonate resins, polyetherimide resins, polyamideimide resins, polyimide resins, bismaleimide resins, polysulfone resins, polyether sulfone resins, epoxy-modified urethane resins, polyvinyl alcohol resins, and polyvinylpyrrolidone resins. These resins may be used alone or as a combination of the two or more thereof.

Examples of the binder also include bentonite, lignin sulfonate, molasses, carboxymethylcellulose, konjac flour, sodium alginate, polyacrylamide, polyvinyl acetate, polyvinyl alcohol, and starch. These may be used alone or as a combination of the two or more thereof, or may be used in combination with the resin(s) described above.

Solvent/Dispersion medium

The solvent or the dispersion medium is not particularly limited, as long as it is a liquid capable of dissolving or dispersing the binder. The solvent or dispersing medium include water, alcohols (e.g., methanol or ethanol), ketones (e.g., methyl ethyl ketone or acetone), hydrocarbons (e.g., cyclohexane, toluene or xylene), halogenated hydrocarbons (e.g., dichloromethane), amides (e.g., N-methylpyrrolidone or dimethylformamide), ethers (e.g., tetrahydrofuran). The solvent or dispersion medium is particularly preferably water.

The binder-containing liquid used in the present disclosure can be prepared, for example, by further adding a solvent or a dispersion medium to a commercially available sizing agent of a relatively high concentration which is composed of a binder and a solvent or a dispersion medium. In particular, the binder-containing liquid can be prepared by adding a dispersion medium, in particular water, to a sizing agent having a binder and a dispersion medium, in particular water.

The sizing agent (and the binder-containing liquid obtained by adding a solvent or a dispersion medium to the sizing agent) may be, for example, in the form of an aqueous emulsion in which a binder is dispersed in water, and in particular, may be an aqueous polyurethane.

The concentration of the binder in the sizing agent is not particularly limited, but may be, for example, 10 to 80 % by weight, 20 to 60 % by weight, or 30 to 50 % by weight.

The amount of the binder may be 0.1% by weight or more, 0.5% by weight or more, 1% by weight or more, or 1.5% by weight or more, and/or 20% by weight or less, 15% by weight or less, 10% by weight or less, 8% by weight or less, or 7% by weight or less, based on the binder-containing liquid. The amount of the binder is particularly preferably from 1% by weight to 10% by weight, or from 2% by weight to 8% by weight, based on the binder-containing liquid. The amount of the solvent or the dispersion medium (in particular, water) may be 80% by weight or more, 85% by weight or more, 90% by weight or more, 92% by weight or more, or 93% by weight or more, and/or 99.9% by weight or less, 99.5% by weight or less, 99% by weight or less, or 98.5% by weight or less, based on the binder-containing liquid.

The amount of the binder is preferably from 0.1 % by weight to 10 % by weight, particularly preferably from 0.5 % by weight to 8 % by weight, or from 1 % by weight to 7 % by weight, based on the regenerated carbon fibers.

Fiber opening

The regenerated carbon fiber can be subjected to a fiber opening treatment in advance. By performing the fiber opening treatment, entanglement of fibers with each other may be eliminated, and it may be possible to promote orientation of fibers in one direction during the granulation step.

The method of the fiber opening treatment is not particularly limited, but it can be performed by, for example, a rotation blade. The rotation blade for the fiber opening may be an auxiliary blade mounted on a granulator.

Further, the fiber opening treatment can be performed by high-speed stirring.

Mixing

The method of obtaining the mixture from the regenerated carbon fiber and the binder-containing liquid is not particularly limited. The regenerated carbon fiber and binder-containing liquid can be charged in the form of a mixture to the container used in the granulation step. For example, a mixture may be obtained by pouring a binder-containing liquid into a mass of regenerated carbon fibers and by optionally performing stirring, and then this mixture may be charged into a container. Alternatively, regenerated carbon fibers and a binder-containing liquid may be separately charged into a container and mixed in the container to obtain the mixture. Mixing and granulation may be performed simultaneously.

The regenerated carbon fibers and the binder-containing liquid in the mixture need not necessarily be uniformly distributed within the mixture. The mixture can be agitated during the granulation step to improve uniformity.

Granulation step

In the method according to the present disclosure, a spindle-shaped precursor is produced by making the mixture tumble in a container in a clearance between the inner wall of the container and the rotating body in the container (hereinafter this step may be referred to as "granulation step").

Without wishing to be bound by theory, it is considered that by making a mixture comprising regenerated carbon fibers and a binder-containing liquid tumble in a clearance between the inner wall of the container and the rotating body in the container, the fibers are bonded to each other via the binder while being oriented in a particular direction, resulting in a precursor having a spindle-shape.

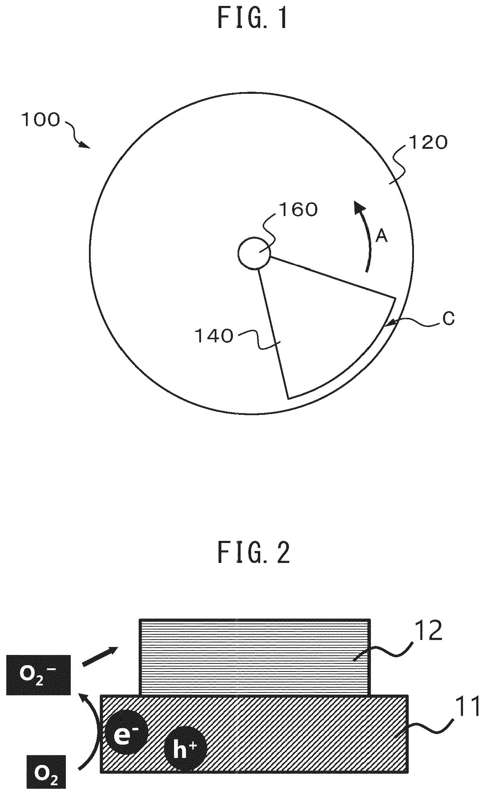

The method for making the mixture tumble in the clearance between the inner wall of the container and the rotating body in the container is not particularly limited. An exemplary method for this is described below with reference to FIG. 1.

FIG. 1 is a schematic diagram of one embodiment of a stirring granulator that can be used in the present disclosure. The stirring granulator 100 of FIG. 1 includes a cylindrical container portion 120 as a container and an agitation blade 140 as a rotating body. The stirring granulator 100 of FIG. 1 is in a horizontal configuration, and in a normal state of use, the opening of the container portion 120 opens toward the lateral direction. FIG. 1 is from a viewpoint of looking into the inside of the container part. A shaft portion 160 is attached to an inner wall of the container portion 120 facing the opening (a wall on the back side from the viewpoint above). The shaft portion 160 extends in the horizontal direction. The agitation blade 140 can rotate around the shaft portion 160 (although it is counterclockwise ("A") in the example of FIG. 1, it can be clockwise). In other words, the agitation blade 140 of FIG. 1 is configured to rotate in a plane parallel to the gravitational direction. Although not shown in FIG. 1, an auxiliary blade for opening of fibers may be installed in the container portion 120.

In the granulation process, a mixture comprising regenerated carbon fibers and a binder-containing liquid is optionally mixed and stirred, and made tumble by an agitation blade 140 rotating in the container portion 120 and made tumble in a clearance (indicated by reference number "C" in FIG. 1) between the inner wall of the container portion 120 and the agitation blade 140 in the container portion 120.

The granulation treatment can be carried out at ambient atmospheric temperature or under heating. The granulation process can be performed, for example, over a period of from 1 minute to 1 hour, from 5 minutes to 20 minutes, or from 8 minutes to 15 minutes.

Container

The container of the present disclosure is not particularly limited, as long as it is suitable for retaining the mixture therein and for performing the granulation step described above to the mixture. The container is preferably made of a material having excellent rigidity and durability. In particular, the inner wall of the container is preferably made of a material which does not wear during the tumbling of the mixture, or is surface-treated to prevent such a wear.

In one embodiment according to the present disclosure, the container is not inclined and is substantially parallel to the horizontal direction. For example, the lower portion of the inner wall of the container in the gravitational direction may be non-inclined and substantially parallel to the horizontal direction.

Rotating body

The rotating body is configured to be able to make a mixture comprising regenerated carbon fibers and a binder-containing liquid tumble between the rotating body itself and the inner wall of the container, by rotating within the container. The rotating body is attached to, for example, a shaft portion installed in the container, and is configured to be able to rotate about the shaft portion.

The rotating body preferably has the form of a blade. The rotating body is particularly preferably a stirring blade. The stirring blade is preferably made of a material having excellent rigidity and durability, and in particular, is preferably made of a material that does not wear during the tumbling of the mixture, or is surface-treated to prevent such a wear.

Clearance

The size of the clearance between the inner wall of the container and the rotating body, i.e. the distance between the inner wall of the container and the rotating body, may be constant or may vary continuously or discontinuously.

The size of the clearance between the inner wall of the container and the rotating body, i.e., the distance between the inner wall of the container and the rotating body, can be selected accordingly depending on the desired size of the carbon fiber aggregate, etc., and for example it may be from 1 to 10 mm.

Stirring granulator (Tumbling granulator)

As the apparatus having the above-described container and the rotating body, a known stirring granulator (tumbling granulator) can be used. The stirring granulator is not particularly limited, and for example, a Henschel type granulator (Henschel mixer), a pugmill type granulator, or an Eilich-type stirring granulator can be used. As the stirring granulator either the vertical type or the horizontal type can be used.

Spindle-shaped precursor

The spindle-shaped precursor contains regenerated carbon fibers and a binder, and contains a liquid (especially water) derived from the binder-containing liquid. The liquid (in particular the moisture) in the precursor can be removed in the drying step below.

Drying process

In the method according to the present disclosure, the obtained spindle-shaped precursor is dried.

The method of drying the precursor is not particularly limited, and the temperature condition, the time condition, etc., can be determined accordingly in accordance with the moisture content of the obtained precursor, etc. In order to reduce the drying load, the spindle-shaped precursor may be subjected to a dehydration treatment after the granulation step and before the drying step.

Carbon fiber aggregate

The Invention 1a of the present disclosure encompasses the following carbon fiber aggregate:

a spindle-shaped carbon fiber aggregate comprising at least regenerated carbon fibers and a binder,
wherein the average length of the regenerated carbon fibers is 1 mm or more and less than 30 mm,
and wherein the average length of the carbon fiber aggregate is from 1.5 mm to 60 mm.

The carbon fiber aggregate exhibits particularly good feedability due to their shape. The method for producing the carbon fiber aggregate is not particularly limited. The carbon fiber aggregate according to the Invention 1a of the present disclosure can be produced, for example, by the above-described method according to the present disclosure. For each component of the carbon fiber aggregate, reference may be made to the above description of the method for producing the carbon fiber aggregate.

Bulk density

The carbon fiber aggregate according to Invention 1a of the present disclosure preferably has a bulk density of 50 g/L or more, 75 g/L or more, or 100 g/L or more, and/or 500 g/L or less, 400 g/L or more, 300 g/L or less, or 200 g/L or less.

Bulk density can be measured as follows:
the sample is poured from the height of 63 mm into a 200 ml container with an inner diameter 63 mm using a funnel having an outlet inner diameter 18mm, and the container is filled with the sample so that the sample is heaped. Then, after the sample is leveled, the weight of the sample is measured. Based on the obtained weight and the volume of the container, the bulk density is calculated.

Invention 1b

Invention 1b of the present disclosure relates to a spindle-shaped aggregate of carbon fibers and thermoplastic resin fibers, comprising carbon fibers, thermoplastic resin fibers, and a binder,
wherein the carbon fibers and the thermoplastic resin fibers contained in the aggregate are oriented along the longitudinal axis of the aggregate.

The aggregate according to Invention 1b of the present disclosure contains the thermoplastic resin fiber, i.e., a fibrous thermoplastic resin. Without wishing to be bound by theory, it is considered that the fibrous nature of the thermoplastic resin facilitates the alignment of the carbon fibers and the thermoplastic resin fibers along a certain direction, thereby facilitating their assembly into a granular aggregate and further facilitating the formation of a spindle shape. If the aggregate is granular, the handleability is improved during the manufacture of the carbon-fiber-containing molded article using the aggregate. In addition, it is considered that the aggregate having a spindle shape has particularly good feedability during the manufacture of the carbon-fiber-containing article using the aggregate. Without wishing to be bound by theory, it is considered that an aggregate having a spindle shape has a relatively low contact resistance and therefore can flow through the supply port relatively smoothly without clogging the feed port, for example, of an extruder.

Further, since the aggregate according to Invention 1b of the present disclosure has thermoplastic resin fibers in addition to the carbon fibers, unlike the conventional carbon fiber aggregate containing only carbon fibers, it is possible to omit the step of kneading a carbon fiber aggregate and a thermoplastic resin to produce a pellet, and it is possible to directly produce a carbon-fiber-containing molded article.

Further, according to the aggregate of Invention 1b of the present disclosure, it is possible to omit a step of manufacturing a pellet, which is required in the case of the conventional carbon fiber aggregate, and thus it is possible to prevent carbon fibers from being broken during the manufacture of a pellet. Therefore, it is considered that by producing a carbon-fiber-containing molded article using the aggregate according to the present disclosure, a molded article having improved physical properties can be obtained.

Hereinafter, the invention according to Invention 1b of the present disclosure will be described in detail.

Aggregate of thermoplastic resin fibers and carbon fibers

The aggregate of thermoplastic resin fibers and carbon fibers according to Invention 1b of the present disclosure has a spindle-shape, and comprising carbon fibers, thermoplastic resin fibers, and a binder,
wherein the carbon fibers and the thermoplastic resin fibers contained in the aggregate are oriented along the longitudinal axis of the aggregate.

The aggregate according to Invention 1b of the present disclosure includes carbon fibers, thermoplastic resin fibers, and a binder. In the aggregate, the fiber component, which is composed of the carbon fibers and the thermoplastic resin fibers, are bonded to each other by the binder. The aggregate is preferably composed substantially of, and particularly preferably consists of, carbon fibers, thermoplastic resin fibers, and a binder.

The amount of the binder in the aggregate is preferably from 0.1% to 10% by weight, in particular from 0.5% to 9% by weight, or from 1% to 8% by weight, based on the aggregate.

The aggregate may contain 1 to 1000 parts by weight, 5 to 900 parts by weight, 10 to 750 parts by weight, 20 to 500 parts by weight, or 50 to 250 parts by weight of the thermoplastic resin fibers, based on 100 parts by weight of the carbon fibers.

The aggregate according to the present disclosure has a spindle-shape. As described above, the spindle-shape means a shape having the thick central portion and gradually tapering off toward both ends.

Fiber Orientation

In the aggregate according to Invention 1b of the present disclosure, the fiber component (carbon fibers and thermoplastic resin fibers) contained in the aggregate are oriented along the longitudinal axis direction of the spindle shape. Incidentally, in the case where the aggregate has a deformed spindle shape (for example, a curved spindle shape), the phrase "the fibers are oriented along the longitudinal axis direction of the spindle shape" means that the fibers contained in the aggregate are oriented along the axis of the deformed spindle-shaped aggregate. This orientation of the fibers need not necessarily be the same as (i.e., parallel to) the longitudinal axis direction of the aggregate, but is preferably substantially parallel, and more specifically, the average extension direction of the fibers has an angle of 45° or less, 40° or less, 30° or less, 20° or less, or 10° or less with respect to the longitudinal axis direction of the spindle-shaped aggregate. The average extension direction of the fibers with respect to the longitudinal axis direction of the spindle-shaped aggregate is preferably close to 0°, and the lower limit thereof is not particularly limited, but may be, for example, greater than 0°, greater than or equal to 1°, or greater than or equal to 2°.

The average extension direction of fibers with respect to the longitudinal axis direction of an aggregate can be determined by measuring randomly selected N=30 fibers using a digital camera, an optical microscope, etc., in a cross section parallel to the longitudinal axis direction of the aggregate, and by calculating the average value based on the measured value. In this calculation, fluffed fibers (i.e., fibers partially separated from the aggregate) are excluded.

The average extension direction of fibers with respect to the longitudinal axis direction of the aggregate can also be determined by simply measuring the randomly selected N=30 fibers on the surface of an aggregate using a digital camera, an optical microscope, etc., and by calculating the average value based on the measured value. Also in this case, the fluffed fibers (i.e., fibers that are partially separated from the aggregate) are excluded.

Incidentally, in the case where the aggregate has a deformed spindle shape (for example, a curved spindle shape), the orientation of fibers and the extending direction thereof can be determined with respect to the axis of an aggregate. The length and aspect ratio of an aggregate can also be determined in a similar manner.

Average length of aggregate

The average length of the aggregate according to Invention 1b of the present disclosure may be 1.5 mm to 60 mm. Preferably, the average length of the aggregate is 1.8 mm or more, 2.0 mm or more, 3.0 mm or more, 4.0 mm or more, 5.0 mm or more, 6.0 mm or more, 7.0 mm or more, 8.0 mm or more, 9.0 mm or more, 10 mm or more, 11 mm or more, 12 mm or more, or 15 mm or more, and/or 50 mm or less, 40 mm or less, 30 mm or less, or 25 mm or less. It is considered that particularly good feedability can be obtained when the average length of the aggregate is in the above range.

The average length of an aggregate can be calculated by measuring the lengths of 50 aggregates in the longitudinal axis direction visually using a caliper, etc., or in an image obtained by a digital camera, an optical microscope, etc., and by averaging the measured values.

Preferably, the average length of the aggregate is 1.2 to 5.0 times the average length of the carbon fibers and the average length of the thermoplastic resin fibers contained in the aggregate. When the average length of the aggregate is within said range, particularly good feedability may be obtained.

Particularly preferably, the average length of the aggregate is 1.4 times or more, 1.5 times or more, or 1.6 times or more, and/or 4.5 times or less, 4.0 times or less, 3.5 times or less, 3.0 times or less, or 2.5 times or less, of the average length of the carbon fibers and the average length of the thermoplastic resin fibers. When the average length of the aggregate is within said range, particularly good feedability may be obtained.

The average length of carbon fibers and the average length of thermoplastic resin fibers can be calculated, respectively, by measuring the lengths of 50 fibers visually using a caliper, etc., or in an image acquired by a digital camera, an optical microscope, etc., and by averaging the measured values.

Average maximum width of aggregate

The average maximum width of the carbon fiber aggregate may be 0.1 mm to 5.0 mm. Preferably, the average maximum width of the aggregate is 0.2 mm or more, 0.3 mm or more, 0.4 mm or more, 0.5 mm or more, 1.0 mm or more, 1.5 mm or more, or 2.0 mm or more, and/or 4.5 mm or less, or 4.0 mm or less. The average maximum width of the carbon fiber aggregate is an average of the largest lengths (i.e., widths) in a direction perpendicular to the longitudinal direction. When the average maximum width of the carbon fiber aggregate is within said range, good feedability can be obtained.

The average maximum width of the carbon fiber aggregate can be calculated by measuring the maximum length of 50 carbon fiber aggregates in the minor axis direction visually using a caliper, etc., or in an image obtained a by a digital camera or an optical microscope, and by averaging the measured values.

Aspect Ratio

The aspect ratio of the carbon fiber aggregate may be from 2 to 150, from 2 to 100, or from 2 to 50. The aspect ratio of the aggregate is preferably 2 to 20, 3 to 15, or 4 to 10. When the aspect ratio is within said range (in particular, when the aspect ratio is within said preferred range), an aggregate having particularly excellent shape stability and feedability may be obtained.

The aspect ratio is a value obtained by dividing the major axis of a spindle-shaped aggregate by the minor axis thereof, i.e., the major axis/minor axis. As the degree of elongation increases, the aspect ratio increases.

The aspect ratio can be obtained by measuring the major axis and minor axis of the aggregate visually using a caliper, etc., or using a digital camera, an optical microscope, etc., and by calculating the major axis/minor axis. Note that the largest length (i.e., width) in a direction perpendicular to the direction of the major axis can be used as a "minor axis".

The method for producing the aggregate according to Invention 1b of the present disclosure is not particularly limited. The aggregate according to Invention 1b of the present disclosure can be produced, for example, by the method according to the Invention 1b of the present disclosure described below.

Bulk density

The aggregate according to Invention 1b of the present disclosure preferably has bulk density of 50 g/L or more, 75 g/L or more, or 100 g/L or more, and/or 500 g/L or less, 400 g/L or less, 300 g/L or less, or 200 g/L or less.

With regard to a method for measuring bulk density, reference may be made to the above description regarding Invention 1a.

Carbon fiber

The Carbon fiber is a raw material of the aggregate and includes a conventional carbon fiber (i.e., a carbon fiber that is not a regenerated carbon fiber, a so-called virgin carbon fiber), a regenerated carbon fiber, and a mixture thereof. The carbon fiber may be, for example, a PAN-based carbon fiber or a pitch-based carbon fiber.

The shape of the carbon fiber is not particularly limited, but may be a form of a carbon fiber bundle composed of a plurality of single fiber (i.e., single fibers, filaments). The number of filaments constituting the carbon fiber bundle may range from 1,000 to 80,000, or from 3,000 to 50,000. Further, the diameter of the filaments constituting the carbon fiber may be from 0.1 μm to 30 μm, from 1 μm to 10 μm, or from 3 μm to 8 μm.

Regenerated carbon fiber

The regenerated carbon fiber (recycled carbon fiber) comprises a carbon fiber component and a carbon component other than the carbon fiber component (in particular, a residual carbon component). Usually, in the regenerated carbon fiber, the carbon component, which is not the carbon fiber component, adheres to the surface of the carbon fiber component.

The regenerated carbon fiber is not particularly limited, and may be, for example, a regenerated carbon fiber obtained by subjecting a carbon-fiber-containing plastic article, such as carbon-fiber-reinforced plastic (CFRP), to a heat treatment. The regenerated carbon fiber may be a regenerated carbon fiber described below with respect to Invention 2.

Particularly preferably, the regenerated carbon fiber is a regenerated carbon fiber obtained by the thermal activation of semiconductors method. A particularly preferred embodiment of the following method according to the present disclosure comprises decomposing a plastic component contained in a carbon-fiber-containing plastic article by the thermal activation of semiconductors method, in order to produce a regenerated carbon fiber.

For the "Thermal Activation of Semi-Conductors method" (TASC method), reference may be made to the above description of Invention 1a.

The carbon fiber component in the regenerated carbon fiber may be modified by undergoing a heat treatment, etc., during a production process of a regenerated carbon fiber. For details of the carbon fiber component in the regenerated carbon fiber, reference may be made to the above description of the carbon fiber.

The residual carbon component in the regenerated carbon fiber is usually derived from a resin contained in a carbon-fiber-containing plastic article used as a raw material during the manufacture of a regenerated carbon fiber. In general, during the process of heat treatment of a carbon-fiber-containing plastic article, a plastic component is thermally decomposed, and a residual carbon remains on the surface of the carbon fiber component.

In the present disclosure, preferably, the residual carbon component is more than 0 % by weight and 5.0 % by weight or less, based on the regenerated carbon fibers. In this case, an aggregate with improved feedability may be obtained.

Further, when the residual carbon component is more than 0 % by weight and 5.0 % by weight or less, it is possible to avoid contamination caused by a relatively large amount of a carbon component (particularly, carbon). It is also possible to reduce a carbon component that can become a foreign matter when producing a carbon-fiber-containing product, etc., using the aggregate as a raw material. It is also possible to improve the uniform distribution of the fibers in the carbon-fiber-containing article.

Preferably, the residual carbon component is 4.0 % by weight or less, 3.0 % by weight or less, or 2.0 % by weight or less, based on the regenerated carbon fibers. The residual carbon component is preferably reduced as much as possible, but may be 0.1% by weight or more, 0.2% by weight or more, 0.4% by weight or more, 0.6% by weight or more, 0.8% by weight or more, 1.0% by weight or more, or 1.2% by weight or more, with respect to the carbon fibers.

The content of the residual carbon component in the regenerated carbon fibers can be measured by thermogravimetric analysis (TGA method).

For a method for measuring a residual carbon component by thermogravimetric analysis, reference may be made to the above description of invention 1a.

Thermoplastic resin fiber

Examples of the thermoplastic resin fiber include polyolefin resin fibers (for example, polypropylene resin fibers and polyethylene), polyester resin fibers (for example, polyethylene terephthalate resin fibers, polybutylene terephthalate resin fibers, and polylactic acid), polyamide resin fibers, polyether ketone resin fibers, polycarbonate resin fibers, phenoxy resin fibers, and polyphenylene sulfide resin fibers. The thermoplastic resin fiber may be only one or a mixture of two or more thermoplastic resin fibers.

Average length of fiber

The carbon fiber may have an average length of 1 mm or more and less than 30 mm. The fiber having a length in this range can be obtained, for example, by cutting fibers having longer dimensions. The average length of the carbon fibers may be 2 mm or more, 3 mm or more, or 4 mm or more, and/or 29 mm or less, 28 mm or less, 27 mm or less, 26 mm or less, 25 mm or less, 24 mm or less, 23 mm or less, 22 mm or less, 21 mm or less, 20 mm or less, 15 mm or less, or 10 mm or less. In particular, the average length of the carbon fibers may be 8 mm to 25mm, or 9 mm to 20 mm.

In a preferred embodiment of Invention 1b of the present disclosure, the average length of the carbon fibers is 2 mm or more and 20 mm or less, in particular 3 mm or more and 15 mm or less. In this case, particularly good feed properties are obtained.

Further, in an embodiment of Invention 1b of the present disclosure, the average length of the carbon fibers is more than 6 mm and 30 mm or less, in particular 8 mm or more and 25 mm or less. In this case, when a carbon-fiber-containing article is manufactured using the aggregate according to the present disclosure, a carbon-fiber-containing article having particularly excellent physical properties, such as strength, may be obtained.

The thermoplastic resin fiber can have an average length of 1 mm or more and less than 30 mm. The fiber having a length in this range can be obtained, for example, by cutting fibers having longer dimensions. The average length of the thermoplastic resin fiber may be, in each case, 1.5 mm or more, 2 mm or more, or 3 mm or more, and/or 28 mm or less, 26 mm or less, 24 mm or less, 22 mm or less, 20 mm or less, 18 mm or less, 16 mm or less, 14 mm or less, 12 mm or less, 10 mm or less, or 8 mm or less.

It is believed that when the average length of the carbon fibers and the average length of the thermoplastic resin fibers are 1 mm or more and less than 30 mm, uniform orientation of fibers is promoted, resulting in a spindle-shaped aggregate which exhibits particularly good feedability. Without wishing to be bound by theory, it is believed that when the average length of the raw fibers is sufficiently long, it facilitates the orientation of fibers along one direction, resulting in a spindle-shaped aggregate. It is also believed that when the average length of fibers is sufficiently short, entanglement of the fibers with each other is prevented and thus promotes uniform orientation of fibers.

The average length of the carbon fibers and the average length of the thermoplastic resin fibers can be calculated in each case by measuring lengths of 50 fibers visually using a caliper, etc., or in an image acquired by a digital camera or an optical microscope, and by averaging the measured values.

Method for manufacturing aggregate

Invention 1b of the present disclosure includes a method for producing an aggregate according to Invention 1b of the present disclosure, comprising:

> providing a mixture at least composed of carbon fibers, thermoplastic resin fibers, and a binder-containing liquid (provision step);
> making the mixture tumble in a container, in order to produce a spindle-shaped precursor (granulation step), and
> drying the precursor (drying step).

With regard to each component of the above manufacturing method, reference may be made to the above description of the aggregate according to Invention 1b of the present disclosure.

Provision step

In the method according to Invention 1b of the present disclosure, a mixture is provided which is at least composed of carbon fibers, thermoplastic resin fibers, and a binder-containing liquid. The mixture consists in particular of carbon fibers, thermoplastic resin fibers and a binder-containing liquid.

The amount of the binder-containing liquid in the mixture is preferably from 20% to 70% by weight, and particularly preferably, from 25% to 60% by weight or from 30% to 50% by weight. In this case, due to the liquid contained in the binder, the fibers are aggregated particularly well. Further, in this case, the load of the drying process can be reduced due to the fact that the amount of the liquid contained in the binder does not become excessive. The binder-containing liquid contains a solvent or a dispersion medium. Preferably, the content of the solvent or dispersion medium (in particular water) in the mixture is from 20% to 70% by weight, in particular from 25% to 60% by weight, or from 30% to 50% by weight. More preferably, the content of the solvent or dispersion medium (in particular water) in the mixture is from 20% to 45%, from 20% to 40%, or from 20% to 30% by weight. When the content of the solvent or dispersion medium (especially water) is relatively low in this way, the load for drying can be reduced particularly effectively.

The contents of the carbon fibers and the thermoplastic resin fibers in the mixture can be determined accordingly so that the weight ratio of these fibers in the resulting aggregate meets a desired value. In particular, the content of the carbon fibers and the content of the thermoplastic resin fibers in the mixture may be in each case from 2.5% by weight to 80 % by weight, from 5% by weight to 70% by weight, or from 10% by weight to 60% by weight.

Binder-containing liquid

For the binder-containing liquid and the components therein, reference may be made to the above description of Invention 1a.

The amount of the binder may be 0.5 % by weight or more, 1% by weight or more, 1.5% by weight or more, 2.0% by weight or more, or 3.0% by weight or more, and/or 20% by weight or less, 15% by weight or less, 10% by weight or less, 9% by weight or less, or 8% by weight or less, based on the binder-containing liquid. Particularly preferably, the amount of the binder may be from 1% by weight to 10% by weight or from 2% by weight to 8% by weight, based on the binder-containing liquid. The amount of the solvent or disperse medium may be 80% by weight or more, 85% by weight or more, 90% by weight or more, 92% by weight or more, or 93% by weight or more, and/or, 99.9% by weight or less, 99.5% by weight or less, 99% by weight or less, or 98.5% by weight or less, based on the binder-containing liquid.

Further, the amount of the binder is preferably from 0.1% by weight to 10% by weight, particularly preferably from 0.5% by weight to 9.0% by weight, from 1.0% by weight to 8.0% by weight, or from 2.0% by weight to 7.0% by weight, based on the total of the carbon fibers and the thermoplastic resin fibers.

Fiber opening

The fiber component, in particular the carbon fibers, can in advance be subjected to the fiber opening treatment. For the opening treatment, reference may be made to the above description regarding Invention 1a.

Mixing

With regard to a method for obtaining a mixture from carbon fibers, thermoplastic resin fibers, and a binder-containing liquid, it is not particularly limited. Carbon fibers, thermoplastic resin fibers and a binder-containing liquid can be charged, in the form of a mixture, into a container used for the granulation step. For example, a binder-containing liquid may be poured into mass of carbon fibers and thermoplastic resin fibers to obtain a mixture, optionally with stirring, and, this mixture may be charged into a container. Alternatively, carbon fibers, thermoplastic resin fibers, a binder-containing liquid may be separately charged into a container and mixed in the container to form a mixture. Mixing and granulation may be performed simultaneously.

The carbon fibers, thermoplastic resin fibers, and binder-containing liquid in the mixture need not necessarily be uniformly distributed within the mixture. The mixture can be agitated during the granulation process to improve uniformity.

Granulation step

In the method according to Invention 1b of the present disclosure, the spindle-shaped precursor is produced by making the mixtures tumble in a container (hereinafter this process may be referred to as "granulation step").

The method of making the mixture tumble in the container is not particularly limited, and a known method (particularly, a known granulating method) can be used.

In particular, the spindle-shaped precursor is produced by making the mixture tumble in a container in a clearance between the inner wall of the container and the rotating body in the container. Without wishing to be bound by theory, it is believed that by making a mixture comprising carbon fibers and thermoplastic resin fibers and a binder-containing liquid tumble in a clearance between the inner wall of the container and the rotating body in the container, the fibers are bonded to each other via a binder while being oriented in a particular direction, and as a result, a spindle-shaped precursor can be obtained particularly efficiently.

A method for making the mixture tumble in a clearance between the inner wall of a container and the rotating body in the container is not particularly limited. For this method, reference may be made to the above description of Invention 1a of present disclosure, except that the mixture comprises carbon fibers, thermoplastic resin fibers, and a binder-containing liquid.

Spindle-shaped precursor

The spindle-shaped precursor contains carbon fibers and thermoplastic resin fibers as well as a binder, and contains a liquid (in particular water) derived from a binder-containing liquid. The liquid (in particular the moisture) in the precursor can be removed in the following drying step.

Drying process

In the method according to the present disclosure, the obtained spindle-shaped precursor is dried.

The method for drying the precursor is not particularly limited, and the temperature condition, the time condition, etc., can be determined in accordance with the moisture content of the obtained precursor, etc. In order to reduce the drying load, it is possible to subject the spindle-shaped precursor to a dehydration treatment after the granulation step and before the drying step.

Invention 2

The carbon-fiber-reinforced thermoplastic resin pellet according to Invention 2 of the present disclosure comprises regenerated carbon fibers and a thermoplastic resin, characterized in that:

the regenerated carbon fibers have a single fiber tensile strength of 3.0 GPa or greater and Weibull shape parameter of 6.0 or greater; and
the regenerated carbon fibers contain a residual carbon component and the content of the residual carbon component is more than 0% by weight and 5.0% by weight or less with respect to the regenerated carbon fibers.

In general, the carbon-fiber-reinforced thermoplastic resin pellet is obtained by melt-kneading a thermoplastic resin and carbon fibers in a twin-screw extruder, etc. However, the carbon fiber may be broken in the extruder by being subjected to a kneading process which exerts high shear stress. If the average fiber length of the carbon fibers in the obtained pellets is less than 300 $\mu$m, the reinforcing effect for mechanical properties may be reduced.

Without wishing to be bound by theory, it is considered that the regenerated carbon fiber according to Invention 2 of the present disclosure has a high Weibull shape parameter for the single fiber tensile strength, and therefore, the variation in tensile strength is small. Therefore, the single fiber breakage of the regenerated carbon fiber is relatively suppressed since the number of single fibers having a low tensile strength is reduced as compared with a common unused carbon fiber having an equivalent tensile strength.

Furthermore, in general, when the variation in the tensile strength of carbon fibers introduced into an extruder is large, fibers with low strength are more finely crushed, so that 300 $\mu$m or less of carbon fibers remain in the pellet in a relatively large amount. On the other hand, as described above, it is considered that since the regenerated carbon fiber according to Invention 2 of the present disclosure has small variation in tensile strength due to high Weibull shape parameter, the proportion of fibers crushed to 300 $\mu$m or less is reduced, and as a result, the substantial reinforcing effect for mechanical properties is obtained.

In particular, in the production of the pellet according to Invention 2 of the present disclosure, a carbon fiber aggregate can be used as a source of regenerated carbon fiber. The carbon fiber aggregate includes regenerated carbon fibers and a binder. For manufacturing methods thereof, reference may be made, for example, to the description of Patent No. 3452363 and JP2020-180421A. In a particularly preferred embodiment of the method according to the present disclosure, a spindle-shaped carbon fiber aggregate is used. For a method for obtaining the spindle-shaped carbon-fiber aggregate, reference may be made to the above description of Invention 1a.

By using the spindle-shaped carbon fiber aggregate as a source of the regenerated carbon fibers, the fibers can be particularly stably supplied to the thermoplastic resin, even when the regenerated carbon fibers have a low residual carbon content.

Further, without wishing to be bound by theory, the spindle-shaped carbon fiber aggregate is relatively easily defibrated through kneading in an extruder, and can be suitably dispersed in the thermoplastic resin, and thus a short-fiber-reinforced thermoplastic resin pellet can be produced without excessive kneading. Therefore, it is considered that since the proportion of carbon fibers having a relatively long fiber length can be further increased in a short-fiber-reinforced thermoplastic resin pellet, it is possible to produce a pellet exhibiting particularly excellent mechanical properties.

Hereinafter, the inventions according to Invention 2 of the present disclosure will be described in more detail.

Regenerate carbon fiber (regenerated carbon fiber material)

A regenerated carbon fiber (a recycled carbon fiber) includes a carbon fiber component and a carbon component other than the carbon fiber component (in particular, a residual carbon component). Usually, in a regenerated carbon fiber, a carbon component other than a carbon fiber component adheres to the surface of the carbon fiber component.

The regenerated carbon fibers according to the present disclosure is characterized that they have a single fiber tensile strength of 3.0 GPa or greater and a Weibull shape parameter of 6.0 or greater, and contains a residual carbon component, wherein a content of the residual carbon component is more than 0% by weight and 5.0% by weight or less with respect to the regenerated carbon fibers.

A method for the regeneration is not particularly limited, as long as the regenerated carbon fibers have the above characteristics. A regenerated carbon fiber obtained by a heat treatment of a carbon-fiber-containing plastic article, such as carbon-fiber-reinforced plastic (CFRP), can be used.

Particularly preferably, the regenerated carbon fiber is a regenerated carbon fiber obtained by the thermal activation of semiconductors method (TASC method). In other words, a particularly preferred embodiment of the present disclosure includes a regenerated carbon fiber produced by decomposing a plastic component contained in a carbon-fiber-containing plastic article by the thermal activation of semiconductors method.

Descriptions will be made later for a method for obtaining a regenerated carbon fiber having the characteristics according to Invention 2 of the present disclosure using the thermal activation of semiconductors method.

Average residual fiber length

Preferably, the average residual fiber length of the regenerated carbon fibers in the carbon-fiber-reinforced thermoplastic resin pellet (i.e., the average fiber length of the regenerated carbon fibers present in the pellet) is 300 $\mu$m or more. The average residual fiber length of the regenerated carbon fibers is more preferably 320 $\mu$m or more, 330 $\mu$m or more, or 340 $\mu$m or more. The upper limit of the average residual fiber length of the regenerated carbon fibers is not particularly limited, but may be 600 $\mu$m or less, or 500 $\mu$m or less.

An average residual fiber length of regenerated carbon fiber in the carbon-fiber-reinforced thermoplastic pellet can be calculated as a number average value, by removing the matrix resin in a pellet by a known decomposition method (for example, sulfuric acid decomposition method, thermal decomposition method, or solvent decomposition method), then performing filtration, and then measuring the single fiber length of 300 or more single fibers using a microscope.

Occurrence rate of 300 $\mu$m or less single fiber

With regard to the regenerated carbon fiber in the carbon-fiber-reinforced thermoplastic resin pellet, the occurrence rate of single fibers of 300$\mu$m or less is preferably 40% or less. The occurrence rate of single fibers of 300 $\mu$m or less is particularly preferably 39% or less, 38% or less, 37% or less, or 36% or less. The lower limit of the occurrence rate of single fibers of 300 $\mu$m or less is not particularly limited, but may be, for example, 1% or more, or 10% or more.

The occurrence rate of the single fibers of 300 $\mu$m or less can be obtained by measuring the fiber length of single fibers in the same manner as the measurement of the average residual fiber length described above, and then calculating the percentage of the number of fibers of 300 $\mu$m or less.

Single fiber tensile strength

The single fiber tensile strength is preferably 3.1 GPa or greater, 3.2 GPa or greater, 3.3 GPa or greater, or 3.4 GPa or greater. The upper limit of the single fiber tensile strength is not particularly limited, but may be 6.0 GPa or less.

The single fiber tensile strength can be measured according to JIS R7606 as follows:

at least 30 monofilaments (i.e., single fiber) are collected from a fiber bundle,
a cross-sectional area is calculated by measuring the diameter of a single fiber in a side image of the single fiber captured by a digital microscope,
the sampled single fiber is fixed to a perforated mount using an adhesive,
a mount to which the single fiber is fixed is attached to a tensile tester, and a tensile test is performed at a test length 10 mm and strain rate 1 mm/min, so as to measure the tensile fracture stress,
the tensile strength is calculated from the cross-sectional area of the single fiber and the tensile fracture stress, and
the average tensile strength of at least 30 single fibers is used as the single fiber tensile strength.

Weibull shape parameter

The Weibull shape parameter is preferably 6.5 or greater, 7.0 or greater, 7.5 or greater, 8.0 or greater, or 8.5 or greater. The upper limit of the Weibull shape parameter is not particularly limited, but may be 15.0 or less. Incidentally, when the Weibull shape parameter of the single fiber tensile strength is high, it means that the variation of the single fiber tensile strength is small.

The Weibull shape parameter can be calculated according to the following equation:

$$\ln\ln\{1/(1-F)\}=m\times\ln\sigma+C$$

wherein F is the fracture probability determined by the symmetric sample cumulative distribution method, $\sigma$ is the single fiber tensile strength (MPa), m is the Weibull shape parameter, and C is the constant.

The Weibull shape parameter m can be obtained in a Weibull plot of $\ln\ln\{1/(1-F)\}$ and $\ln\sigma$, from the first-order approximated slope.

Carbon fiber component

The carbon fiber component in the regenerated carbon fiber is usually derived from a carbon fiber content in a carbon-fiber-containing article, etc., which was used as a raw material for the regenerated carbon fiber. A carbon fiber component in the regenerated carbon fiber may be modified by undergoing a heat treatment , etc., during the process of producing the regenerated carbon fiber.

The carbon fiber component in the regenerated carbon fiber may be, for example, a PAN-based carbon fiber or a pitch-based carbon fiber.

The form of the carbon fiber component in the regenerated carbon fibers is not particularly limited, but may be a form of a carbon fiber bundle composed of a plurality of single fiber (i.e., single fibers, filament). The number of filaments constituting the carbon fiber bundle may range from 1,000 to 80,000, or from 3,000 to 50,000. In addition, the diameter of the filaments constituting the carbon fiber component in the regenerated carbon fiber may be from 0.1 $\mu$m to 30 $\mu$m, from

1$\mu$m to 10 $\mu$m, or from 3 $\mu$m to 8 $\mu$m.

Residual carbon component

The residual carbon component contained in the regenerated carbon fibers is, in particular, a residual carbon derived from a resin contained in a carbon-fiber-containing plastic article used as a raw material in the production of the regenerated carbon fiber.

Preferably, the residual carbon component is 4.0 % by weight or less, 3.0 % by weight or less, or 2.0 % by weight or less, based on the regenerated carbon fibers. The residual carbon component is preferably reduced as much as possible, but may be 0.1 % by weight or more, 0.2 % by weight or more, 0.4 % by weight or more, 0.6 % by weight or more, 0.8 % by weight or more, 1.0 % by weight or more, or 1.2 % by weight or more, based on the carbon fibers.

The content of the residual carbon component in the regenerated carbon fibers can be measured by the thermogravimetric analysis (TGA method).

With regard to a method for measuring the residual carbon component by the thermogravimetric analysis, reference may be made to the above description of Invention 1a.

Thermoplastic resin

Examples of the thermoplastic resin contained in the carbon-fiber-reinforced thermoplastic resin pellet according to Invention 2 of the present disclosure include polyolefin resins (for example, polypropylene resins and polyethylene resins), polyester resins (for example, polyethylene terephthalate resins, polybutylene terephthalate resins, and polylactic acid resins), polyamide resins, polyether ketone resins, polycarbonate resins, phenoxy resins, and polyphenylene sulfide resins. The thermoplastic resin may be only one type or may be a mixture of two or more types of thermoplastic resins.

Pellet

The carbon-fiber-reinforced thermoplastic resin pellet according to Invention 2 of the present disclosure comprises regenerated carbon fibers and a thermoplastic resin.

The shape of the carbon-fiber-reinforced thermoplastic resin pellet according to Invention 2 of the present disclosure is not particularly limited, but the length of the pellet in the longitudinal direction is preferably 3 mm or more and 10 mm or less, and may in particular be 5 mm or less.

Content of regenerated carbon fiber

The content of the regenerated carbon fibers in the carbon-fiber-reinforced thermoplastic resin pellet according to Invention 2 of the present disclosure is preferably 30 % by weight or less, less than 30 % by weight, 20 % by weight or less, 15 % by weight or less, and/or, 5 % by weight or more, 7 % by weight or more, 8 % by weight or more, or 10 % by weight or more, based on the carbon-fiber-reinforced thermoplastic resin pellet.

When the content of the regenerated carbon fibers is 30% by weight or less with respect to the carbon-fiber-reinforced thermoplastic resin pellet, the carbon fibers can be dispersed in the pellet in a particularly uniform manner. In addition, when the content of the regenerated carbon fibers is 5% by weight or more with respect to the carbon-fiber-reinforced thermoplastic resin pellet, it is possible to obtain a particularly good reinforcing effect for mechanical properties of the pellet.

Production method for pellet

As for a method for producing the carbon-fiber-reinforced thermoplastic resin pellet according to Invention 2 of the present disclosure, it is not particularly limited, but can be obtained, for example, by a production method, comprising:

providing regenerated carbon fibers,
providing a thermoplastic resin, and
kneading the regenerated carbon fibers with the thermoplastic resin which has been melted,
wherein,
the regenerated carbon fibers have a single fiber tensile strength of 3.0 GPa or greater and a Weibull shape parameter of 6.0 or greater, and
the regenerated carbon fibers contain a residual carbon component, and the content of the residual carbon component is more than 0 % by weight and 5.0 % by weight or less with respect to the regenerated carbon fibers.

With regard to the regenerated carbon fiber and the thermoplastic resin used in the production of the carbon-fiber-reinforced thermoplastic resin pellet according to Invention 2 of the present disclosure, reference may be made to the above descriptions of the carbon-fiber-reinforced thermoplastic resin pellet according to Invention 2 of the present disclosure.

In the step of providing the regenerated carbon fibers, a spindle-shaped carbon fiber aggregate can be used as a source of the regenerated carbon fibers. That is, when the regenerated carbon fibers are provided, a spindle-shaped carbon fiber aggregate containing regenerated carbon fibers can be provided as the regenerated carbon fibers. For the spindle-shaped carbon fiber aggregate, reference may be made to the above description of the spindle-shaped carbon fiber aggregate according to Invention 1a of the present disclosure. By using a spindle-shaped carbon fiber aggregate as a source of the regenerated carbon fibers, it may be possible to further improve the feedability during the production of a pellet as compared with the case where chopped fibers are used as a source of the regenerated carbon fibers. A method for producing the spindle-shaped carbon fiber aggregate is not particularly limited, but preferably the spindle-shaped carbon fiber aggregate can be produced according to the method of Invention 1a of the present disclosure for producing the carbon fiber aggregate.

In one exemplary embodiment for producing the carbon-fiber-reinforced thermoplastic resin pellet according to the present disclosure, a thermoplastic resin serving as a base resin is supplied through a main feeder of a twin-screw kneading extruder; the resin is kneaded and melted in the extruder, and then regenerated carbon fibers (in particular, spindle-shaped regenerated carbon fiber aggregates) are supplied into this resin from a twin-screw feeder; and the extruded material which has been kneaded is cooled in a water-cooled bath, and then cut so as to obtain a carbon-fiber-reinforced thermoplastic resin pellet.

Molded article

A molded article can be produced by molding the carbon-fiber-reinforced thermoplastic resin pellet according to the present disclosure using an extruder, etc. Molded articles formed using the pellet according to the present disclosure exhibit good physical properties, and in particular, good mechanical properties.

Tensile strength

Preferably, according to ISO527, a molded article, which is produced by the method described in the Example section, exhibits a tensile strength of 90 MPa or greater, particularly preferably from 92 MPa to 110 MPa or from 95 MPa to 100 MPa.

Flexural strength

Preferably, according to ISO178, a molded article, which is produced by the method described in the Example section, exhibits a flexural strength of 140 MPa or greater, particularly preferably from 140 MPa to 160 MPa, from 140 MPa to 150 MPa or from 140 MPa to 145 MPa.

Flexural modulus

Preferably, according to ISO178, a molded article, which is produced by the method described in the Example section, exhibits a flexural modulus of 7100 MPa or greater, particularly preferably from 7100 MPa to 8000 MPa, from 7100 MPa to 7500 MPa or from 7100 MPa to 7400MPa.

Method for producing a regenerated carbon fiber by the thermal activation of semiconductors method

Described below is a method for obtaining a regenerated carbon fiber having the characteristics according to Invention 2 of the present disclosure by using the thermal activation of semiconductors method. In the following description, a method for decomposing a plastic-containing material will be described first, and then a description is made for a method for recovering an inorganic material (a carbon fiber) from a plastic-containing material containing plastic and the inorganic material (carbon fiber) using this decomposition method.

Method for decomposing plastic-containing material

The method for decomposing a plastic-containing material according to the present disclosure comprises: heating the plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material.

FIG. 2 is a conceptual cross-sectional view for explaining the decomposing method according to the present invention. A mechanism of the decomposition of the plastic-containing material according to the present invention will be described below. It should be noted that there is no intention to limit the present invention by theory.

It is considered that when a semiconductor material 11 is heated in an oxygen atmosphere, holes $h^+$ and electrons $e^-$ are generated in the semiconductor material 11, and the electrons $e^-$ react with oxygen $O_2$ in the atmosphere, in order to generate $O_2^-$ radicals (active oxygen). Then, in a plastic-containing material 12 disposed adjacently to the semiconductor material 11, the radical propagation occurs, and the plastic-containing material 12 is decomposed into low-molecular-weight components, and further, oxidized and decomposed into decomposed gases such as CO2, $H_2O$, $CH_4$, etc. It is considered that the radicals promote the oxidative decomposition of the plastic by pulling hydrogen out from the plastic.

By using a semiconductor material, the heat introduced for the decomposition of the plastic can be reduced as compared with the case where a semiconductor material is not used, and as a result, the energy consumption can be reduced.

In the conventional plastic decomposition method based on the thermal activation of semiconductors, oxidation-induced excessive heat may be generated during the heat treatment. In the conventional method, it is considered that since the heat treatment is performed in an atmosphere in which the oxygen concentration is not controlled, radicals are generated excessively, resulting in the generation of oxidation-induced excessive heat.

On the other hand, the present inventors have found that even in the presence of a semiconductor material, by using a relatively low oxygen concentration, it is possible to subject a plastic to an efficient heat treatment, while suppressing the generation of oxidation-induced excessive heat.

In particular, in the initial stage of the thermal decomposition of a plastic, oxidation-induced excessive heat tends to be generated due to a relatively large amount of plastic. On the other hand, according to the method of the present disclosure, since the heat treatment is efficiently performed at a relatively low oxygen concentration, it is possible to suppress the generation of the oxidation-induced excessive heat even in the initial stage of the decomposition.

Therefore, according to the method of the present disclosure, since the heat treatment is performed in the presence of a semiconductor material, it is possible to obtain a good decomposition efficiency even at a relatively low oxygen concentration, and further, by making the concentration of oxygen in the furnace relatively low, it is possible to suppress the oxidation-induced excessive heat, and thus it is possible to achieve a decomposition treatment having improved stability.

The decomposing method according to the present invention will be described with reference to a drawing which depicts an exemplary embodiment.

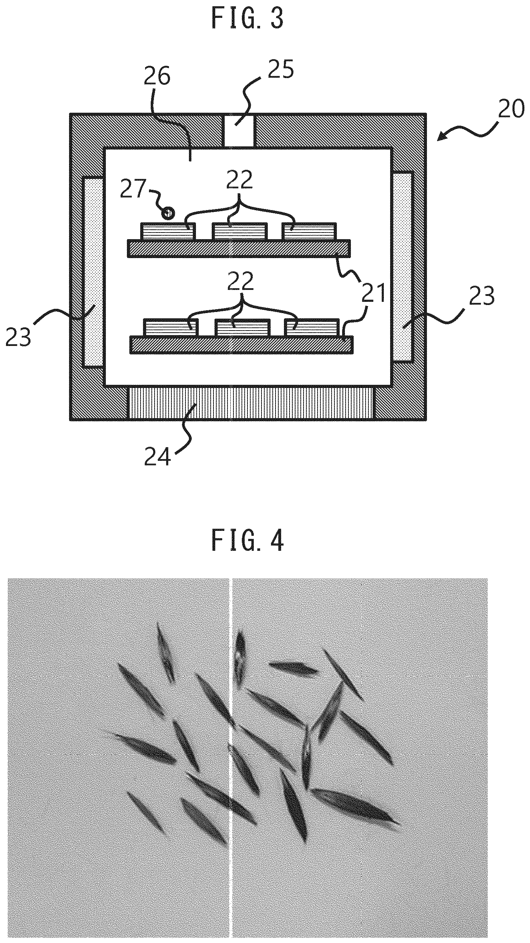

FIG. 3 is a cross-sectional view schematically showing one embodiment of the decomposing method according to the present disclosure. The furnace 20 shown in FIG. 3 includes a heat source (heater) 23, a gas supply part 24, an exhaust port 25, and an internal space 26. A porous carrier 21 is arranged in the internal space 26 of the furnace 20, and a semiconductor material is carried on the surface of the carrier 21. In the embodiment of FIG. 3, a plastic-containing material 22 is arranged in contact with the carrier 21.

The temperature of the atmosphere in the interior space 26 of the furnace 20 may be controlled via the heat source (heater) 23 of the furnace 20 so that the surface temperature of the plastic-containing material 22 is at a certain temperature. The surface temperature of the plastic-containing material 22 can be measured via a temperature sensor 27 located within 5 mm from the surface of the plastic-containing material 22.

A low oxygen concentration gas having an oxygen concentration of less than 10% by volume is introduced into the internal space 26 of the furnace 20 through the gas supply part 24. The oxygen concentration of the atmosphere in the furnace 20 can be controlled by selecting the introduction rate of the low oxygen concentration gas, depending on the internal volume of the furnace. For example, the low oxygen concentration gas can be pushed into the furnace through the gas supply part provided in the furnace, or can be sucked into the furnace by applying a suction pressure to the exhaust port 25.

The low oxygen concentration gas is, for example, a mixed gas of air and nitrogen gas. The oxygen concentration in the furnace can be controlled by selecting the ratio of air and nitrogen gas.

In an atmosphere in which the oxygen concentration is controlled to less than 10% by volume by introducing the low oxygen concentration gas, the plastic-containing material is heated to a first surface temperature, for example, to a first surface temperature of 300°C. to 600°C. As a result, a plastic contained in the plastic-containing material 22 is decomposed into decomposed gases such as water vapor, carbon dioxide, and methane, and the decomposed gases are discharged from the exhaust port 25 of the furnace 20.

After said heat treatment at an oxygen concentration of less than 10% by volume, a heat treatment can be further performed wherein the oxygen concentration is increased to 10% by volume or more.

Further, after the heat treatment, an inorganic material contained in the plastic-containing material can be recovered.

Hereinafter, a decomposing method according to the present disclosure will be described in more detail.

Plastic-containing material

The plastic-containing material contains a plastic. The plastic-containing material may be a plastic material or a plastic composite material.

Examples of the plastic contained in the plastic-containing material include a thermoplastic resin and a thermosetting resin.

Examples of the thermoplastic resin contained in the plastic-containing material include polycarbonate (PC) resins, polyethylene (PE) resins, polypropylene (PP) resins, polyvinyl chloride (PVC) resins, polystyrene (PS) resins, polyethylene terephthalate (PET) resins, acrylonitrile-butadiene-styrene (ABS) resins, polyamide (PA) resins, polylactic acid resin (PLA), polyimide (PI) resins, polymethyl methacrylate (PMMA) resins, methacrylic resins, polyvinyl alcohol (PVA) resins, polyacetal resins, petroleum resins, AS resins, modified polyphenylene ether resins, polybutylene terephthalate (PBT) resins, polybutene (PB) resins, fluororesins, polyacrylate resins, polyether ether ketone (PEEK) resins, and polyphenylenesulfide (PPS) resins.

Examples of the thermosetting resin contained in the plastic-containing material include phenol resins, urethane foam resins, polyurethane resins, urea resins, epoxy resins, unsaturated polyester resins, melamine resins, alkyd resins, vinyl ester resins, and cyanate resins.

The plastic-containing material may contain at least one selected from the group consisting of the thermoplastic resins and the thermosetting resins describe above.

Plastic composite material

The plastic-containing material is in particular a plastic composite material. The plastic composite material is, for example, a fiber-reinforced plastic (FRP). A reinforcing fiber contained in the fiber-reinforced plastic includes a carbon fiber.

Carbon-fiber-reinforced plastic

The plastic composite material is in particular a carbon-fiber-containing plastic products such as a carbon-fiber-reinforced plastic (CFRP). The carbon-fiber-reinforced plastic contains a plastic and a carbon fiber material (a carbon fiber). The carbon-fiber-reinforced plastic may comprise other component(s) and/or material(s) (e.g., a reinforcing fiber other than the carbon fiber, a resin molded article, a metal, a ceramic, etc.).

Examples of the carbon fiber contained in the carbon-fiber-reinforced plastic include, but are not limited to, a PAN-type carbon fiber and a pitch-type carbon fiber. The carbon fiber may be one type or may be composed of two or more types.

The carbon fiber material contained in the carbon-fiber-reinforced plastic may be in any form, and may be, for example, a carbon fiber bundle, a woven fabric formed from a carbon fiber bundle, or a non-woven of a carbon fiber.

Introduction of low oxygen concentration gas

In the method according to the present disclosure, a low oxygen concentration gas having an oxygen concentration of less than 10% by volume is introduced into the atmosphere of the furnace.

Preferably, the oxygen concentration of the low oxygen concentration gas introduced in the atmosphere of the furnace is more than 0% by volume, 1% by volume or more, 2% by volume or more, 3% by volume or more, or 4% by volume or more, and/or 9% by volume or less, 8% by volume or less, or 7% by volume or less.

The timing at which the low oxygen concentration gas is introduced into the furnace can be determined depending on, for example, the type of plastic contained in the plastic-containing material, and the surface temperature at which the decomposition of the plastic begins. Further, the timing at which the low oxygen concentration gas is introduced into the furnace can be determined based on data acquired in advance with regard to the self-heating of the plastic-containing material.

In a preferred embodiment according to the present disclosure, the low oxygen concentration gas is introduced into the atmosphere of the furnace while the surface temperature of the plastic-containing material contained in the furnace is less than 300°C.

More preferably, the low oxygen concentration gas having an oxygen concentration of less than 10% by volume is introduced into the atmosphere of the furnace while the surface temperature of the plastic-containing material contained in the furnace is 250°C. or less, 200°C. or less, or 150°C. or less.

More preferably, the low oxygen concentration gas having an oxygen concentration of less than 10% by volume is introduced into the atmosphere of the furnace which contains a plastic-containing material having a surface temperature of less than 300°C., in order to achieve less than 10% by volume of oxygen concentration in the atmosphere of the furnace. Incidentally, when the low oxygen concentration gas of less than 10% by volume oxygen concentration is introduced into the atmosphere of the furnace, the lower limit of the surface temperature of the plastic-containing material contained in the furnace is not limited, but may be, for example, 0°C. or more, 10°C. or more, 20°C. or more, or greater or equal to room temperature.

More preferably, the low oxygen concentration gas having an oxygen concentration of less than 10% by volume is introduced into the atmosphere of the furnace, in particular into the atmosphere of the furnace which contains a plastic-containing material having a surface temperature of less than 300°C., in order to control the oxygen concentration in the atmosphere of the furnace to more than 0% by volume, 1% by volume or more, 2% by volume or more, 3% by volume or more, or 4% by volume or more, and/or 9% by volume or less, 8% by volume or less, or 7% by volume or less.

The oxygen concentration in the furnace can be measured directly by an oximeter (oxygen monitor) or can be determined based on the internal volume of the furnace and the amount of gas introduced into the furnace. The oxygen concentration in the furnace is preferably the average oxygen concentration over the course of the heat treatment.

The introduction of the low oxygen concentration gas into the furnace can be carried out, for example, by pushing the low oxygen concentration gas into the furnace via a gas supply part provided in the furnace, or by performing a suction from a suction port (or an exhaust port) provided in the furnace so that the gas flows into the furnace from a gas supply part provided at a location different from the suction port. The gas supply part of the furnace may have, for example, an opening and/or a gas-permeable material.

The amount of the gas introduced into the furnace can be selected based on the unit resin amount of a resin to be decomposed (for example, an epoxy resin), and depending on the capacity and the desired oxygen concentration of the furnace, etc.

For example, the gas introduction rate to the furnace per unit resin amount may be determined in a range of 1 to 1000 (L/min)/kg, preferably in a range of 2 to 700 (L/min)/kg. In addition, the time period for replacing the atmosphere of the furnace by the introduced gas can be determined, based on the determined gas introduction rate and the volume of the furnace used.

In particular, the introduction rate of the low oxygen concentration gas can be selected relative to the furnace volume, so that the atmosphere in the furnace is replaced by the introduced low oxygen concentration gas while the surface temperature of the plastic-containing material contained in the furnace is less than 300°C.

The low oxygen concentration gas introduced into the furnace may comprise a dilution gas, and is in particular a mixed gas of air and the dilution gas. Examples of the dilution gas include nitrogen gas, carbon dioxide gas, water vapor, and superheated steam. Incidentally, the superheated steam is a steam heated to a temperature equal to or higher than the boiling point. The superheated steam has an advantage that it has relatively high heat transfer properties to a material to be decomposed.

Furnace

The furnace may be a combustion furnace or an electric furnace. The furnace may have, for example, an internal space for accommodating the plastic-containing material and the semiconductor material, a heat source (heater) for heating the atmosphere in the furnace, a gas supply part for introducing the low oxygen concentration gas into the furnace, an exhaust port for discharging the decomposed gas, and optionally a suction port for applying suction pressure to the inside of the furnace. Note that it is also possible to use a single structure for both of the exhaust port and suction port. For example, one or more openings provided in the furnace can be used as the exhaust port and/or the suction port.

Surface temperature

The "surface temperature" of the plastic-containing material can be determined by measuring the temperature within 5 mm from plastic-containing material during the heat treatment.

The surface temperature of the plastic-containing material can be controlled, for example, by controlling the temperature in the furnace via a heat source of the furnace and/or by introducing a low temperature gas into the furnace, and/or by reducing the oxygen concentration to suppress the oxidation-induced heat generation.

Further, it is also possible to control the surface temperature with higher accuracy, by measuring the surface temperature of the plastic-containing material with a temperature sensor placed within 5 mm from the surface of the plastic-containing material and then by controlling the heat source of the furnace based on the measured value in a feed-back manner.

Further, for example, data may be acquired in advance with regard to the correlation between the temperature in the furnace and/or the output of the heat source and the surface temperature measured by the sensor, and the heat treatment may be performed based on this data.

Heat treatment

A method according to the present disclosure comprising:
heating a plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material.

Preferably, the heat treatment is carried out in an atmosphere where the oxygen concentration has been controlled to less than 10% by volume by an introduction of a low oxygen concentration gas having less than 10% by volume of oxygen concentration; in particular, the heat treatment is carried out in an atmosphere having more than 0% by volume, 1% by volume or more, 2% by volume or more, 3% by volume or more, or 4% by volume or more of oxygen concentration, and/or having 9% by volume or less, 8% by volume or less, or 7% by volume or less of oxygen concentration.

First surface temperature

The "first surface temperature" is a surface temperature of the plastic-containing material. The "first surface temperature" can be determined by measuring the temperature within 5 mm from the plastic-containing material during the heat treatment, in a similar manner as in the "surface temperature" described above.

The first surface temperature may be 300°C. or more, 325°C. or more, or 350°C. or more, and/or 600°C. or less, 550°C. or less, 500°C. or less, or 450°C. or less. The first surface temperature is, for example, 300°C. to 600°C., 300°C. to 550°C., 300°C. to 500°C., or 300°C. to 450°C.

When the first surface temperature is less than the above range, decomposition of the plastic may not occur. Further, when the first surface temperature exceeds the above range, in the case where the plastic-containing material comprises a valuable material such as a carbon fiber, the deterioration and/or burnout of the valuable material such as a carbon fiber due to the heating in the presence of oxygen may become prominent. By setting the first surface temperature to a relatively low temperature, the effect of suppressing the oxidation-induced excessive heat is further enhanced.

In a preferred embodiment of the present disclosure, the first surface temperature is increased to a temperature of 450°C. or higher during the heat treatment at an oxygen concentration of less than 10% by volume. If the heating temperature is relatively low, further decomposition of the plastic may be hindered by carbides formed on the surface of the plastic-containing material. However, by increasing the surface temperature to 450°C. or higher, it is possible to remove the carbides even at a relatively low oxygen concentration. Therefore, it is possible to further improve the decomposition efficiency of the plastic.

Preferably, the heat treatment under the introduction of the low oxygen concentration gas having an oxygen concentration of less than 10% by volume is performed for a predetermined period of time. This predetermined time may be from 1 minute to 600 minutes, preferably from 30 minutes to 300 minutes, more preferably from 60 minutes to 180 minutes. Incidentally, the starting point of the above "predetermined time" may be a time point at which the temperature of the furnace reaches 300°C. or a time point at which the beginning of the plastic decomposition has been detected.

Semiconductor material

The semiconductor material may be placed in the furnace together with the plastic-containing material, or the semiconductor material may be placed in the furnace in advance, and then the plastic-containing material may be placed adjacent to or in contact with the semiconductor material.

In an embodiment of the present disclosure, the plastic-containing material, which is subjected to a heat treatment, and the semiconductor material are arranged so that they are spaced apart from each other at a distance of less than or equal to 50 mm. For this purpose, for example, a spacer can be used which is arranged between the plastic-containing material and the semiconductor material. In this case, although the lower limit of the distance is not particularly limited, it may be more than 0 mm, more than 1 mm, more than 5 mm, or more than 10 mm.

The distance between the plastic-containing material and the semiconductor material can be measured at the location where they are closest to each other.

In another preferred embodiment according to the present disclosure, the plastic-containing material, which is subjected to a heat treatment, and the semiconductor material are placed in contact with each other.

There is no particular limitation as to how the plastic-containing material and the semiconductor material are in contact with each other. For example, they can be brought into contact with each other by placing the plastic-containing material on the semiconductor material. Further, the plastic-containing material may be placed on the semiconductor material which is carried on the surface of a carrier. In addition, they may be brought into contact with each other by surrounding or covering at least part of or all of the plastic-containing material with the semiconductor material.

The semiconductor material is not particularly limited, as long as it is stable under the temperature and oxygen concentration used in the present invention. The semiconductor material contains, for example, at least one selected from the group consisting of the following materials: BeO, MgO, CaO, SrO, BaO, $CeO_2$, $ThO_2$, $UO_3$, $U_3O_8$, $TiO_2$, $ZrO_2$, $V_2O_5$, $Y_2O_3$, $Y_2O_2S$, $Nb_2O_5$, $Ta_2O_5$, $MoO_3$, $WO_3$, $MnO_2$, $Fe_2O_3$, $MgFe_2O_4$, $NiFe_2O_4$, $ZnFe_2O_4$, $ZnCo_2O_4$, ZnO, CdO, $Al_2O_3$, $MgAl_2O_4$, $ZnAl_2O_4$, $Tl_2O_3$, $In_2O_3$, $SiO_2$, $SnO_2$, $PbO_2$, $UO_2$, $Cr_2O_3$, $MgCr_2O_4$, $FeCrO_4$, $CoCrO_4$, $ZnCr_2O_4$, $WO_2$, MnO, $Mn_3O_4$, $Mn_2O_3$, FeO, NiO, CoO, $Co_3O_4$, PdO, CuO, $Cu_2O$, $Ag_2O$, $CoAl_2O_4$, $NiAl_2O_4$, $Tl_2O$, GeO, PbO, TiO, $Ti_2O_3$, VO, $MoO_2$, $IrO_2$, $RuO_2$, CdS, CdSe, CdTe, $Cu_2O$, $Sb_2O_3$, $MnO_3$, and $CoCrO_4$.

Preferably, the semiconductor material is an oxide semiconductor material. Preferred oxide semiconductor materials include chromium oxide, titanium oxide, zinc oxide, vanadium oxide, tungsten oxide, molybdenum oxide, cobalt oxide, iron oxide, and copper oxide.

The form of the semiconductor material is not particularly limited, and it may be, for example, a plate shape, a granular shape, or a honeycomb shape. From the viewpoint of promoting the decomposition of a plastic, it is preferable that the semiconductor material is carried on the surface of a carrier having air permeability. Examples of the carrier having air permeability include a porous body made of ceramics, etc., and a support having a honeycomb shape. The semiconductor material may be a sintered body of a semiconductor.

Two-stage heating

A heat treatment method according to a preferred embodiment of the present disclosure comprises: subjecting the plastic-containing material, which has been subjected to the heat treatment at the first surface temperature, to a heat treatment in an atmosphere having an oxygen concentration of 10% by volume or more in the presence of a semiconductor material.

The heat treatment at an oxygen concentration of 10% by volume or more is preferably performed under an oxygen concentration of more than 10% by volume, 12% by volume or more, 15% by volume or more, or 20% by volume or more, and/or is performed under an oxygen concentration of 30% by volume or less, or 25% by volume or less.

In this embodiment, which may also be referred to as two-stage heating, the plastic-containing material, which has been subjected to a heat treatment at a relatively low oxygen concentration, is subjected to a further heat treatment under an increased oxygen concentration.

In the initial stage of the thermal decomposition of a plastic, since the amount of the plastic is relatively high, there is a high possibility that the oxidation-induced excessive heat is generated. On the other hand, in the above-described embodiment with two-stage heating, after a heat treatment at a relatively low oxygen concentration, a heat treatment under an increased oxygen concentration is performed. In other words, since the heating under the higher oxygen concentration is performed at a stage where the amount of the plastic has been reduced due to the progress of the decomposition of the plastic, it is possible to suppress the generation of the oxidation-induced excessive heat.

In addition, in the heat treatment at a relatively low oxygen concentration, a part of the plastic may not be vaporized and remain as a carbide. On the other hand, in the above two-stage heating embodiment, since the further heat treatment is performed under an increased oxygen concentration, it is possible to efficiently decompose and remove the residual carbides, and as a result, it is possible to further improve the decomposition efficiency.

With regard to the heat treatment under the introduction of a low oxygen concentration gas having an oxygen concentration of less than 10% by volume and the heat treatment under an oxygen concentration of 10% by volume or more, these heat treatments can be performed continuously in the same furnace. In other words, for example, after a plastic-containing material has been heated to the first surface temperature, the oxygen concentration can be increased to 10% by volume or more in the same furnace, and a further heat treatment can be performed. In the conventional plastic decomposition method, after a batch processing, it was necessary to process a material to be treated, for example by shredding. On the other hand, when the heat treatment under the introduction of a low oxygen concentration gas having less than 10% by volume of oxygen concentration and the heat treatment under an oxygen concentration of 10% by volume or more are performed continuously in the same furnace, it is possible to reduce the number of process steps.

The atmosphere having an oxygen concentration of 10% by volume or more can be formed, for example, by introducing a high oxygen concentration gas having an oxygen concentration of 10% by volume or more into the furnace, and in particular, by introducing air and/or oxygen gas into the furnace. The oxygen concentration of the high oxygen concentration gas may be more than 10% by volume, 12% by volume or more, 15% by volume or more, or 20% by volume or more, and/or 30% by volume or less, or 25% by volume or less.

In the heat treatment at an oxygen concentration of 10% by volume or more, the semiconductor material used in the heat treatment at the first surface temperature can be used.

Second surface temperature

In a particular embodiment, the plastic-containing material, which has been subjected to the heat treatment at the first surface temperature, is heated to a second surface temperature in an atmosphere having an oxygen concentration of 10% by volume or more, in the presence of a semiconductor material.

The "second surface temperature" is a surface temperature of the plastic-containing material to be treated. The "second surface temperature" can be determined by measuring the temperature within 5 mm from the plastic-containing material during the heat treatment, in the same way as in the "surface temperature" and the "first surface temperature" described above.

The second surface temperature may range from 400°C. to 600°C. More preferably, the second surface temperature is 425°C. to 575°C., or 450°C. to 550°C.

If the second surface temperature is lower than the above range, the decomposition efficiency may not be improved. Further, if the second surface temperature exceeds the above range, when the plastic-containing material comprises a valuable material such as a carbon fiber, deterioration and/or burnout of the valuable material such as a carbon fiber due to the heating in the presence of oxygen may become prominent.

The second surface temperature may be substantially the same as the first surface temperature.

Further, the second surface temperature may be greater than or equal to the first surface temperature, or may be greater than the first surface temperature by at least 5°C., by at least 10°C., by at least 25°C., by at least 50°C., or by at least 75°C. The upper limit of the difference between the first surface temperature and the second surface temperature is not particularly limited, but may be, for example, 200°C. or less, or 100°C. or less.

The heat treatment under an oxygen concentration of 10% by volume or more can be performed for a predetermined time. This predetermined time may be, for example, 1 minute to 600 minutes, 60 minutes to 360 minutes, or 90 minutes to 300 minutes.

Application

According to the method of the present disclosure for decomposing a plastic-containing material, it is possible to efficiently vaporize and decompose a wide variety of plastics. The decomposing method according to the present disclosure can also be applied to other materials such as volatile organic compounds (VOC), flue gas, and particulate matter (PM), and can also be used for treating exhaust gas.

Recovering method for inorganic material

A method according to the present disclosure for recovering an inorganic material contained in a plastic composite material will be described below.

In an embodiment of the recovery method according to the present disclosure, the plastic-containing material as a plastic composite material contains a plastic and an inorganic material, the recovery method comprising:
decomposing a plastic contained in the plastic-containing material by the decomposing method described above, in order to recover the inorganic material.

For details of the decomposing method according to the present disclosure that can be used in the recovery method according to the present disclosure, reference can be made to the above description regarding the decomposition method of the plastic-containing material.

As described above, according to the decomposing method of the present disclosure, it is possible to efficiently decompose a plastic. Therefore, according to the recovery method of the present disclosure, since a plastic contained in a plastic composite material can be efficiently and selectively decomposed, it is possible to efficiently recover an inorganic material having good physical properties.

Further, in the recovery method according to the present disclosure, an inorganic material can be recovered without crushing the plastic composite material. However, it should be noted that crushing of the plastic composite material is not particularly excluded, and crushing of the plastic composite material can be optionally performed.

In addition, in the case of recovering an inorganic material from a plastic composite material, it is necessary to suppress the influence of the heat treatment on the inorganic material as much as possible, from the viewpoint of maintaining the quality of the recovered inorganic material. In this regard, in the decomposing method according to the present disclosure, the generation of the oxidation-induced excessive heat is suppressed thanks to a relatively low oxygen concentration. Therefore, according to the recovery method of the present disclosure, it is possible to recover an inorganic material having better physical properties.

Two-stage heating

In another embodiment of the recovery method according to the present disclosure, a plastic-containing material as a plastic composite material is subjected to the two-stage heating. More specifically, the plastic composite material is subjected to a heat treatment under the introduction of a low oxygen concentration gas (having an oxygen concentration of less than 10%) and subsequent heat treatment under an oxygen concentration of 10% by volume or more, in order to decompose a plastic and thus to recover an inorganic material.

When an inorganic material is recovered, it is desirable to suppress the deterioration of the physical properties of the inorganic material due to the oxidation-induced excessive heat, and further, it is preferable to suppress the deterioration of the physical properties of the inorganic material, which is caused by a carbonization of a plastic and its adhesion onto the inorganic material as a residue. In this regard, in the embodiment in which the plastic composite material is subjected to the two-stage heating, since a relatively low oxygen concentration is used in the initial stage where the oxidation-induced excessive heat tends to be generated, deterioration of the physical properties of the inorganic material due to the oxidation-induced excessive heat is suppressed. Further, since a further heat treatment is performed under an increased oxygen concentration, the carbonized resin residue on the inorganic material can be efficiently removed. As a result, by the method of recovering an inorganic material through the two-stage heating, it is possible to ensure better physical properties of the recovered inorganic material.

Inorganic Material

The plastic composite material comprising an inorganic material and a plastic includes a fiber-reinforced plastic (FRP), in particular a carbon-fiber-reinforced plastic.
In particular, the inorganic fiber is a carbon fiber (a carbon fiber material).

Carbon fiber

Examples of the carbon fiber contained in the carbon-fiber-reinforced plastic include, but are not limited to, a PAN-type carbon fiber and a pitch-type carbon fiber. The carbon fiber may be one type or may be composed of two or more types.
The carbon fiber contained in the carbon-fiber-reinforced plastic may be in any form, and may be for example, a carbon fiber bundle, a woven fabric formed from carbon fiber bundles, or a non-woven fabric of carbon fibers.

Recovered product

According to an embodiment of the recovery method of the present disclosure, a residual carbon derived from the plastic, which is recovered together with the inorganic material, is reduced, and in particular, the residual carbon is 5% by weight or less of the recovered inorganic material. Preferably, the residual carbon is 4% by weight or less, 3% by weight or less, 2% by weight or less, 1% by weight or less, 0.9% by weight or less, 0.5% by weight or less, or 0.1% by weight or less of the recovered inorganic material. Although it is preferable that the residual carbon is reduced as much as possible, the lower limit thereof may be 0.001% by weight or more. The amount of the residual carbon in the recovered inorganic material can be measured in the same manner as the amount of the residual carbon in the regenerated carbon fiber, which will be described later.
Further, according to the recovery method of the present disclosure, it is possible to recover a carbon fiber having a physical properties superior to those of a carbon fiber prior to being used for the production of a carbon-fiber-reinforced plastic.
In particular, according to the recovery method of the present disclosure, from a carbon-fiber-reinforced plastic, it is possible to obtain, as an inorganic material, carbon fibers which have the single fiber tensile strength of 3.0 GPa or greater and the Weibull shape parameter of 6.0 or greater.

Single fiber tensile strength

The single fiber tensile strength is preferably 3.1 GPa or greater, 3.2 GPa or greater, 3.3 GPa or greater, or 3.4 GPa or greater. The upper limit of the single fiber tensile strength is not particularly limited, but may be 6.0 GPa or less.
The single fiber tensile strength can be measured according to JIS R7606 as follows:

at least 30 single fibers are collected from a fiber bundle,
the diameters of the single fibers are measured in a side-view image of the single fibers captured by a digital microscope, in order to calculate a cross-sectional area,
the sampled single fibers are fixed to a perforated mount paper using an adhesive,
the mount paper, on which the single fiber has been fixed, is attached to a tensile tester, and a tensile test is performed at 10 mm test length and 1 mm/min strain rate, in order to measure the tensile fracture stress,
the tensile strength is calculated from the cross-sectional area and the tensile fracture stress of the single fiber, and
the average tensile strength of the at least 30 single fibers is determined as the single fiber tensile strength.

(Weibull shape parameter)

The Weibull shape parameter is preferably 6.5 or higher, 7.0 or higher, 7.5 or higher, 8.0 or higher, or 8.5 or higher. The upper limit of the Weibull shape parameter is not particularly limited, but may be 15.0 or less. Incidentally, when the Weibull shape parameter of the single fiber tensile strength is high, it means that the variation of the single fiber tensile strength is small.

The Weibull shape parameter can be calculated according to the following equation:

$$\mathrm{lnln}\{1/(1\text{-}F)\}=m\times \mathrm{ln}\sigma +C$$

wherein, F is fracture probability determined by the symmetric sample cumulative distribution method, $\sigma$ is the single fiber tensile strength (MPa), m is the Weibull shape parameter, and C is a constant.

The Weibull shape parameter m can be obtained by performing Weibull plot of lnln {1/(1-F)} and ln$\sigma$, from on the first-order approximated slope.

Application

According to the recovery method of the present disclosure, for example, it is possible to efficiently recover a valuable material such as a reinforcing fiber and a rare metal, by efficiently decomposing only a matrix resin contained in products such as fiber-reinforced plastics (FRP), photovoltaic panels, and electronic circuits.

Regenerated carbon fiber

The regenerated carbon fiber (i.e., regenerated carbon fiber material) according to the present disclosure can be produced by recovering a carbon fiber from a carbon-fiber-reinforced plastic. In one embodiment according to the present disclosure, the regenerated carbon fiber may have better physical properties than those of a carbon fiber prior to being used for the production of a carbon-fiber-reinforced plastic.

The method for producing the regenerated carbon fiber is not particularly limited. For example, the regenerated carbon fiber can be produced by recovering a regenerated carbon fiber from a carbon-fiber-reinforced plastic by the recovery method according to the present disclosure.

In one embodiment, the regenerated carbon fiber has the single fiber tensile strength of 3.0 GPa or greater and the Weibull shape parameter of 6.0 or greater. The single fiber tensile strength and the Weibull shape parameter can be measured and determined by the methods described above.

The single fiber tensile strength of the regenerated carbon fiber is preferably 3.1 GPa or greater, 3.2 GPa or greater, 3.3 GPa or greater, or 3.4 GPa or greater. The upper limit of the single fiber tensile strength is not particularly limited, but may be 6.0 GPa or less.

The Weibull shape parameter of the regenerated carbon fiber is preferably 6.5 or greater, 7.0 or greater, 7.5 or greater, 8.0 or greater, or 8.5 or greater. The upper limit of the Weibull shape parameter is not particularly limited, but may be 15.0 or less.

Method for producing regenerated carbon fiber

In particular, a method for producing a regenerated carbon fiber having the single fiber tensile strength of 3.0 GPa or greater and the Weibull shape parameter of 6.0 or greater and having the content of a residual carbon component of more than 0 % by weight and 5.0 % by weight or less with respect to the regenerated carbon fiber, comprises:

heating a plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material, wherein the plastic-containing material is a carbon-fiber-reinforced plastic containing the carbon fiber.

In particular, a method for producing a regenerated carbon fiber having the single fiber tensile strength of 3.0 GPa or greater and the Weibull shape parameter of 6.0 or greater and having the content of a residual carbon component of more than 0 % by weight and 5.0 % by weight or less with respect to the regenerated carbon fiber, comprises:

heating a plastic-containing material to a first surface temperature in the presence of a semiconductor material in an atmosphere of a furnace into which a low oxygen concentration gas having an oxygen concentration of less than 10% by volume is introduced, and heating the plastic-containing material, which has been subjected to the heat treatment at the first surface temperature, in the presence of a semiconductor material in an atmosphere having an oxygen concentration of 10% by volume or more, in order to decompose a plastic contained in the plastic-containing material wherein the plastic-containing material is a carbon-fiber-reinforced plastic containing the carbon fiber.

In a preferred embodiment of the method for producing a regenerated carbon fibers according to the present disclosure, a low oxygen concentration gas is introduced into the atmosphere of the furnace while the surface temperature of the plastic-containing material is less than 300°C.

Residual carbon

Preferably, in the regenerated carbon fiber according to the present disclosure, the amount of a residual carbon is reduced, and in particular, the residual carbon is 5% by weight or less with respect to the regenerated carbon fiber. More preferably, the residual carbon is 4% by weight or less, 3% by weight or less, 2% by weight or less, 1% by weight or less, 0.9% by weight or less, 0.5% by weight or less, or 0.1% by weight or less, with respect to the regenerated carbon fiber.
Note that the "residual carbon" is a carbonized component derived from a plastic contained in a carbon-fiber-reinforced plastic, which is a raw material used in the production of the regenerated carbon fiber.
The amount of the residual carbon in a regenerated carbon fiber can be determined by thermogravimetric analysis (TGA).
With regard to the measurement of a residual carbon content by thermo gravimetric analysis, reference may be made to the above description regarding Invention 1a.

Method for manufacturing spindle-shaped carbon fiber aggregate

With regard to the spindle-shaped carbon-fiber aggregate and the method for producing the same described in Invention 2, references may be made to the above descriptions regarding Invention 1a. Further, with regard to the regenerated carbon fiber contained in the carbon fiber aggregate, reference may be made to the above description regarding Invention 1a as well as the above description regarding the regenerated carbon fiber of Invention 2.

Examples

Hereinafter, the present invention will be described in more detail with reference to the Examples. It should be noted that the examples are illustrative, and the present application is not limited thereto.

Example 1A for Invention 1a

Preparation of Materials

Regenerated carbon fiber

Used as regenerated carbon fibers were regenerated carbon fibers having a residual carbon content of 1.4% by weight which were obtained by the thermal activation of semiconductors method.
The amount of the residual carbon component in the regenerated carbon fibers was determined by thermogravimetric analysis (TGA method) as follows:

(i) For a 1 to 4 mg sample piece obtained by grinding the regenerated carbon fiber, the thermogravimetric analysis was performed at 0.2 L/min air supply rate, 5°C./min heating rate, and 1/6s recording rate using a thermogravimetric analyzer over a period of about 600 minutes in total, wherein the analysis included steps of: increasing the temperature from room temperature to 100°C., holding the temperature at 100°C. for 30 minutes, increasing the temperature from 100°C. to 400°C., and holding the temperature at 400°C. for 480 minutes,
(ii) in a graph plotting a weight loss rate with respect to time, the inflection point of the slope was identified, and a weight loss rate in the step of holding at 100°C. was subtracted from the value of a weight loss rate at the inflection point, and then the amount of residual carbon was calculated.

The regenerated carbon fibers had an average length of 5 mm.

Binder-containing liquid

A binder-containing liquid was prepared, wherein the binder-containing liquid had 297 g water as a dispersing medium with respect to a 5.05 g urethane-based resin as a binder.

Granulation treatment

For the granulation treatment, a Henschel-type horizontal stirring granulator (20 L loedige mixer, manufactured by Matsubo Corporation) was used. The stirring granulator had an agitation blade. The agitation blade was connected to a shaft mounted horizontally to a lateral inner wall of a container portion of the stirring granulator and configured to rotate thereabout. Further, the agitation blade was configured to have a clearance of at least about 2 mm and at most about 5 mm between the agitation blade itself and the inner wall of the container portion.

The stirring granulator also had an auxiliary blade to promote fiber opening.

At the same time as the agitation blade started the rotation, 500 g of the above-mentioned regenerated carbon fibers and 302 g of the above-mentioned binder-containing liquid were charged into the container part of the stirring granulator, and a mixing and granulation treatment were performed for 10 minutes at ambient temperature, in order to obtain spindle-shaped precursors.

The moisture content in the mixture was 37.0% by weight. The rotational frequency of the agitation blade was 320 rpm, and the rotational frequency of the auxiliary blade was 3000 rpm.

Drying treatment

The resulting precursors were dried in a dryer to obtain carbon fiber aggregates according to Example A1.

Carbon fiber aggregate

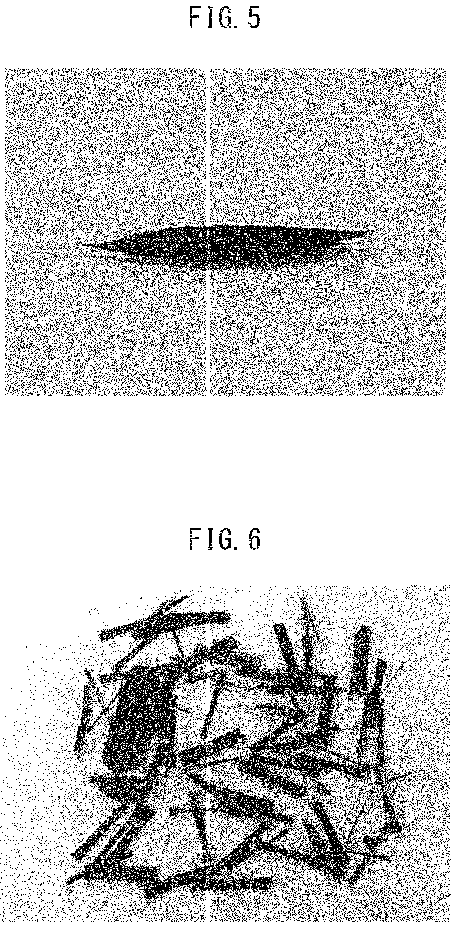

FIG.4 and FIG.5 show photographs of the carbon fiber aggregate according to Example A1. As can be seen in these figures, the carbon fiber aggregate according to A1 had a spindle shape.

Binder content

The content of the binder to the carbon fiber aggregate of Example A1 was 1.0 % by weight.

Aspect Ratio

The major axis and minor axis of the carbon fiber aggregates of A1 were measured using caliper, and the aspect ratio (major axis/minor axis) of the carbon fiber aggregate was calculated. The minor axis was measured at a point where the carbon fiber aggregate exhibited the largest width. As a result of the measurements for 50 samples (N=50), aspect ratio was 7.5.

Average length, average maximum width

As a result of the measurement with a caliper for 50 samples (N=50), the average length of the carbon fiber aggregate according to Example A1 was 13.5 mm and the average largest width was 1.8 mm. Since the average length of the regenerated carbon fibers was 5 mm, the average length of the carbon fiber aggregate was 2.7 times the average length of the regenerated carbon fibers.

Bulk density

The bulk density of the carbon fiber aggregates according to Example A1 was measured. Specifically, the sample was poured from the height of 63 mm into a 200 ml container having a 63 mm inner diameter using a funnel having an 18 mm outlet inner diameter, and filled so that the sample was heaped. Then, after the sample was leveled, the weight of the sample was measured. The bulk density was calculated based on this weight and the volume of the container. Consequently, the bulk density was 181 g/L.

Evaluation of feedability

The feedability (i.e., the feeding performance) of the carbon fiber aggregate according to Example A1 was evaluated. Specifically, the carbon fiber aggregate according to Example A1 was supplied to a capacitive type coil feeder (CFD-111, manufactured by technovel Corporation) at a feeding rate of 1 g/min, and the feedability was evaluated. If a supply can be continuously performed for 10 minutes, it is evaluated as "good" in Table 1 below.

The manufacturing conditions and evaluation results of the carbon fiber aggregate according to Example A1 are shown in Table 1 below.

Example A2 for Invention 1a

The carbon fiber aggregate according to Example A2 was produced and evaluated in the same manner as in Example A1, except that the binder content and water content were changed as shown in Table 1. The manufacturing conditions and evaluation results were shown in Table 1.

Example A3 for Invention 1a

The carbon fiber aggregate according to Example A3 was produced and evaluated in the same manner as in Example A1, except that the binder content and water content were changed as shown in Table 1. The manufacturing conditions and evaluation results were shown in Table 1.

Example A4 for Invention 1a

The carbon fiber aggregate according to Example A4 was produced and evaluated in the same manner as in Example A2, except that the average length of the regenerated carbon fibers was 10 mm. The manufacturing conditions and evaluation results were shown in Table 1.

Comparative Example A1 for Invention 1a

The production of a carbon fiber aggregate was attempted in the same manner as in A2 except that the average length of the regenerated carbon fibers was 30 mm. However, the regenerated carbon fibers were entangled with each other in the granulator, and thus it was not possible to obtain a carbon fiber aggregate having a granular shape. The manufacturing conditions and results are shown in Table 1 below.

Comparative Example A2 for Invention 1a

A carbon fiber aggregate was produced in the same manner as in Example A4 except that a regenerated carbon fiber having a residual carbon content of 7.1 % by weight was used.

FIG.6 shows a photograph of the carbon fiber aggregate according to Comparative Example A2. As can be seen in FIG.6, the carbon fiber aggregate obtained in Comparative Example A2 had a flat plate-like shape, and it was not possible to obtain a carbon fiber aggregate having a spindle shape. Many of the carbon fiber aggregates obtained in Comparative Example A2 remained in the form of a cut regenerated carbon fiber, and they were bonded to each other to form a bundle. In Comparative Example A2, elliptical granular bodies having non-uniform sizes were also observed. The manufacturing conditions and results are shown in Table 1 below.

[Table 1]

EP 4 316 766 B1

Table 1

| | | Production | | | | | | | | | Characteristic | | | | | | |
|---|---|---|---|---|---|---|---|---|---|---|---|---|---|---|---|---|
| | Fiber | Binder | Amount of carbon component in fiber | Average length of fiber | Total amount of fiber | Amount of binder | Water content in binder-containing liquid | Water % in the mixture | Content of binder / Carbon fiber aggregate | Shape | Average length of aggregate | Average max width of aggregate | Average length of aggregate / Average length of carbon fiber | Aspect ratio | Bulk density | Feeder supply |
| | - | - | % by weight | mm | g | g | g | % by weight | % by weight | | mm | mm | - | - | g/L | - |
| Ex. A1 | Regenerated carbon fiber | Urethane-based resin | 1.4 | 5 | 500 | 5.1 | 297 | 37.0 | 1.0 | spindle shape | 13.5 | 1.8 | 2.7 | 7.5 | 181 | Good |
| Ex. A2 | Regenerated carbon fiber | Urethane-based resin | 1.4 | 5 | 500 | 10.2 | 291 | 36.3 | 2.0 | spindle shape | 12.2 | 1.8 | 2.4 | 6.8 | 131 | Good |
| Ex. A3 | Regenerated carbon fiber | Urethane-based resin | 1.4 | 5 | 500 | 20.9 | 281 | 35.0 | 4.0 | spindle shape | 12.7 | 1.5 | 2.5 | 8.5 | 106 | Good |
| Ex. A4 | Regenerated carbon fiber | Urethane-based resin | 1.4 | 10 | 500 | 10.2 | 291 | 36.3 | 2.0 | spindle shape | 18.9 | 1.6 | 1.9 | 11.8 | 127 | Good |
| Comp. Ex. A1 | Regenerated carbon fiber | Urethane-based resin | 1.4 | 30 | 500 | 10.2 | 291 | 36.3 | 2.0 | (*1) | | | - | | | |
| Comp. Ex. A2 | Regenerated carbon fiber | Urethane-based resin | 7.1 | 10 | 500 | 10.2 | 291 | 36.3 | 2.0 | plate shape | | | - | | | |

(*1) not shaped into a granular form

32

Example B1 for Invention 1b

Preparation of Materials

Carbon fiber

Used as carbon fibers were regenerated carbon fibers having a residual carbon content of 1.4 % by weight which were obtained by the thermal activation of semiconductors method.

The amount of a residual carbon component in the regenerated carbon fibers was determined by the thermogravimetric analysis (TGA method) as follows:

(i) For a 4 mg of sample piece obtained by pulverizing regenerated carbon fibers, a thermogravimetric analysis was performed with a thermogravimetric analyzer for a period of about 600 minutes in total, at air supply rate of 0.2L/min, heating rate of 5°C./min and recording rate of 1/6s, wherein the analysis consisted of steps of: increasing the temperature from room temperature to 100°C., holding the temperature at 100°C. for 30 minutes, increasing the temperature from 100°C. to 400°C., and holding the temperature at 400°C. for 480 minutes,
(ii) in a graph plotting the weight loss rate to time, the inflection point of the slope was identified and the weight loss rate in the holding period at 100°C. was subtracted from the value of the weight loss rate in the inflection point, in order to calculate the amount of residual carbon.

The regenerated carbon fibers had an average length of 10 mm.

Thermoplastic resin fiber

As the thermoplastic resin fibers, polyphenylene sulfide resin fibers (PPS resin fibers, single filament fineness of 4.4 denier) having an average length of 5 mm were used.

Fiber component

The PPS resin fibers as the thermoplastic resin fibers used in Example B1 were 70 g, and the regenerated carbon fibers as the carbon fibers were 30 g.

Binder-containing liquid

A binder-containing liquid having 88.5 g of water as a dispersing medium with respect to 6.5 g of an urethane-based resin as a binder was prepared (water emulsion sizing agent).

Granulation Process

For the granulation process, a Henschel-type horizontal stirring granulator (5L PAM apex mixer, manufactured by Pacific Machinery & Engineering Co., Ltd.) was used. The stirring granulator had an agitation blade. The agitation blade is connected to a shaft portion horizontally mounted on a side inner wall of a container portion of the stirring granulator, and is configured to rotate about the shaft portion. In addition, the agitation blade was configured to have a clearance of about 2 mm between the agitation blade itself and the inner wall of the container portion.

The stirring granulator also had an auxiliary blade to promote fiber opening.

At the same time as the stirring blade started rotating, 30 g of the regenerated carbon fibers and 70 g of PPS resin fibers and 95 g of the binder-containing liquid were charged into the container portion of the stirring granulator, and mixed and granulated at ambient temperature for 15 minutes to obtain spindle shaped precursors.

The moisture content in the mixture was 45.4% by weight. The rotational frequency of the agitation blade was 600 rpm, and the rotational frequency of the auxiliary blade was 600 rpm.

Drying treatment

The resulting precursors were dried in a dryer to obtain aggregates according to Example B1.

Aggregate

The aggregate of thermoplastic resin fibers and carbon fibers according to Example B1 had a spindle-shaped configuration. Further, the thermoplastic resin fibers and the carbon fibers contained in the aggregate were oriented along the longitudinal axis direction of the aggregate.

In order to quantify the extension direction of fibers in the aggregate, the aggregate was cut parallel to the longitudinal axis direction, and for N=30 fibers randomly selected in a cross section taken using a digital camera, the absolute values of the angle of the fibers with respect to the longitudinal axis direction of the aggregate were measured, respectively, and the obtained measurement values were averaged to calculate the average extension direction of fibers with respect to the longitudinal axis direction of the aggregate ("degree of fiber orientation" in Table 2 below). In this calculation, fluffed fibers (i.e.. fibers partially separated from the aggregate) were excluded. The degree of fiber orientation for Example B1 was 9°.

Binder content

The binder content for the aggregate of Example B1 was 6.1 % by weight.

Aspect Ratio

Aspect ratio (major axis/minor axis) of the aggregate of Example B1 was calculated using a caliper. The major axis is the length of an aggregate. The minor axis was measured at a point where an aggregate exhibited the largest width. Average value was measured for 50 samples (N=50), and the aspect ratio was 5.4 (Average values: major axis = 20.0 mm, see below; minor axis = 3.7 mm).

Average length, average maximum width

The average length of the aggregate according to Example B1 was 20.0 mm and the average maximal width was 3.7 mm, as measured using a caliper for 50 samples (N=50). Since the average length of the regenerated carbon fibers was 10 mm, the average length of the aggregate was 2.0 times the average length of the regenerated carbon fibers. Further, since the average length the PPS resin fibers was 5 mm, the average length of the aggregate was 4.0 times the average length of the PPS resin fibers.

Bulk density

The bulk density of the aggregate according to Example B1 was measured. Specifically, samples were poured from the height of 63 mm into a 200 ml container having a 63 mm inner diameter using a funnel having an 18 mm outlet inner diameter, and filled so that the samples were heaped. Then, after the samples were leveled, the sample weight was measured. The bulk density was calculated based on this weight and the volume of the container. Consequently, the bulk density was 164 g/L.

The manufacturing conditions and the evaluations of the aggregates according to Example B1 are shown in Table 2 below.

Example B2 for Invention 1b

The aggregate according to B2 was prepared as follows.

Preparation of Materials

Carbon fiber

As carbon fibers, regenerated carbon fibers having a residual carbon content of 1.4 % by weight, which were obtained by the thermal activation of semiconductors method, were used as in Example B1. The regenerated carbon fibers had an average length of 5 mm.

Thermoplastic resin fiber

As the thermoplastic resin fibers, polyphenylene sulfide resin fibers (PPS resin fibers, single filament fineness 4.4 denier) having an average length 5 mm were used.

Fiber component

The PPS resin fibers as the thermoplastic resin fibers used in Example B2 were 350 g, and the regenerated carbon fibers as the carbon fiber were 150 g.

Binder-containing liquid

A binder-containing liquid having 256 g of water as a dispersing medium with respect to 21.0 g of an urethane-based resin as a binder was prepared (water emulsion sizing agent).

Granulation treatment

For the granulation treatment, a vertical stirring granulator (30L MTI mixer, manufactured by Tsukishima Kikai Co., Ltd.) was used.
The stirring granulator had an agitation blade and also an auxiliary blade for facilitating fiber opening.
At the same time as the agitation blade started rotating, 150 g of the regenerated carbon fibers and 350 g of the PPS resin fibers and 277 g of the binder-containing liquid were charged into the container portion of the stirring granulator, and mixed and granulated at ambient temperature for 15 minutes to obtain spindle-shaped precursors.
The moisture content in the mixture was 32.9% by weight. The rotational frequency of the agitation blade was 235 rpm, and the rotational frequency of the auxiliary blade was 3,000 rpm.

Drying treatment

The resulting precursors were dried in a dryer to obtain aggregates according to Example B2.

Aggregate

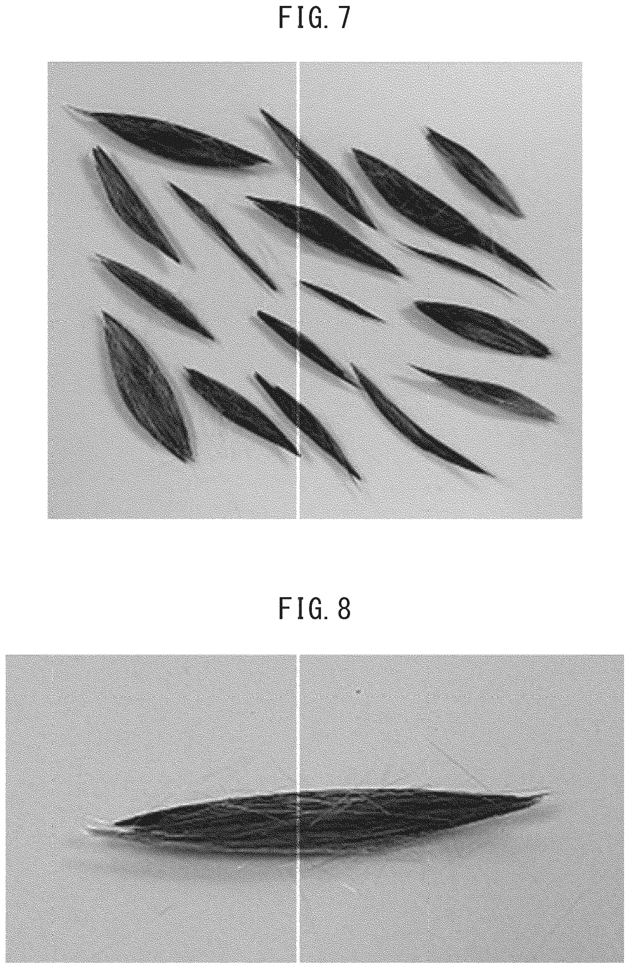

FIG. 7 and FIG. 8 are photographs of aggregate(s) according to Example B2. As can be seen in these figures, the aggregate of thermoplastic resin fibers and carbon fibers according to Example B2 had a spindle-shaped shape. Further, the thermoplastic resin fibers and the carbon fibers contained in the aggregate were oriented along the longitudinal axis direction of the aggregate. The degree of fiber orientation was calculated with regard to Example B2 in the same manner as in Example B1, and the degree of fiber orientation was determined as 7°.

Binder content

The binder content for the aggregate of Example B2 was 4.0 % by weight.

Aspect Ratio

Aspect ratio (major axis/minor axis) of the aggregate of Example B2 was calculated using a caliper. The major axis is the length of an aggregate. The minor axis was measured at a point where the aggregate exhibited the largest width. Average value was measured for 50 samples (N=50) and the aspect ratio was 6.7 (average values: major axis = 17.4 mm, see below; minor axis = 2.6 mm).

Average length, average maximum width

The average length of the aggregate according to Example B2 was 17.4 mm and the average maximal width was 2.6 mm, as measured using a caliper for 50 samples (N=50). Since the average length of the regenerated carbon fibers was 5 mm, the average length of the aggregate was 3.5 times the average length of the regenerated carbon fibers. Further, since the average length of the PPS resin fibers was 5 mm, the average length of the aggregate was 3.5 times the average length of the PPS resin fibers.

Bulk density

In the same manner as in Example B1, the bulk density of the aggregate according to Example B2 was measured. Consequently, the bulk density was 189 g/L.
The manufacturing conditions and the evaluations of the aggregate according to B2 are shown in Table 2 below.

Comparative Example B1 for Invention 1b

Production of an aggregate was attempted in the same manner as in the above Example B2 except that a powder of polyphenylene sulfide resin (PPS powder, median diameter: 270 micrometers) was used instead of the PPS resin fibers. However, it was not possible to obtain a spindle-shaped aggregate.

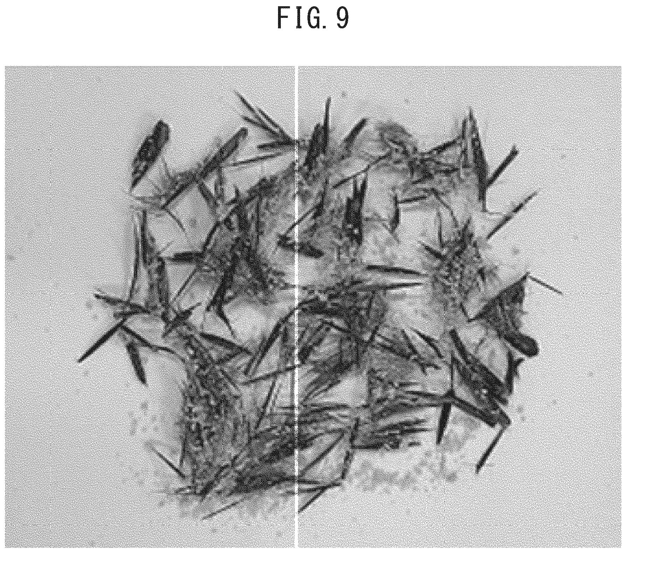

FIG. 9 is a photograph showing the resulting material of Comparative Example B1. Material obtained in Comparative Example B1 was composed mainly of carbon fiber aggregates and the PPS powders, wherein the carbon fiber aggregates have irregular shapes and sizes, and the carbon fibers and the PPS powders were separated from each other. The material according to Comparative Example B1 is not a mixed aggregate in which a resin and carbon fibers are dispersed; therefore, in order to produce a carbon-fiber-containing molded article using the material according to Comparative Example B1, it is necessary to pelletize the material according to Comparative Example B1 by performing a kneading process.

[Table 2]

Table 2

| | Production | | | | | | | | | | Characteristic | | | | | | |
|---|---|---|---|---|---|---|---|---|---|---|---|---|---|---|---|---|---|
| | Carbon fiber (Regenerated carbon fiber) | | Thermoplastic resin fiber (PPS resin fiber) | | Thermoplastic resin fiber (PPS resin powder) | Binder | | Water content | Content of binder | Shape | Average length of aggregate | Average max width of aggregate | Average length of aggregate / Average length of carbon fiber | Average length of aggregate / Average length of thermoplastic resin fiber | Aspect ratio | Fiber orientation | Bulk density |
| | avg. length | wt. | avg. length | wt. | wt. | type | wt. | wt. | | | | | | | | | |
| | mm | g | mm | g | g | - | g | g | wt% | | mm | mm | - | - | - | ° | g/L |
| Ex.B1 | 10 | 30 | 5 | 70 | - | Urethane based resin | 6.5 | 88.5 | 6.1 | Spindle shape | 20.0 | 3.7 | 2.0 | 4.0 | 5.4 | 9 | 164 |
| Ex.B2 | 5 | 150 | 5 | 350 | - | Urethane based resin | 21.0 | 256 | 4.0 | Spindle shape | 17.4 | 2.6 | 3.5 | 3.5 | 6.7 | 7 | 189 |
| Comp. EX.B1 | 5 | 150 | - | - | 350 | Urethane based resin | 21.0 | 256 | 4.0 | | Aggregate was not formed due to insufficient aggregation of fibers and resin | | | | | | |

Example C1 of Invention 2

Preparation of Materials

Regenerated carbon fiber

Used as regenerated carbon fibers were regenerated carbon fibers which were regenerated by the thermal activation of semiconductors method according to the method of Invention 2 of the present disclosure using a cut CFRP as a raw material. The regenerated carbon fibers had an average length of 5 mm, an average single fiber diameter of 7.0 μm, a single fiber tensile strength of 4.2 GPa, a Weibull shape parameter of 8.7, and a residual carbon content of 0.3 % by weight.

Single fiber tensile strength

The single fiber tensile strength was measured according to JIS R7606 as follows:

At least 30 single fibers were collected from a fiber bundle,
a cross-sectional area was calculated by measuring the diameter of the single fiber in a side image of the single fiber captured by a digital microscope,
the sampled single fiber was fixed to a perforated mount using an adhesive,
the mount having the fixed single fiber was attached to a tensile tester and subjected to a tensile test at a test length of 10 mm and strain rate of 1 mm/min, in order to measure the tensile fracture stress,
the tensile strength was calculated from the cross-sectional area of the single fiber and the tensile fracture stress,
the average tensile strength of at least 30 single fibers was used as the single fiber tensile strength.

Weibull shape parameter

The Weibull shape parameter was calculated according to the following formula:

$$\mathrm{lnln}\{1/(1\text{-}F)\}=m{\times}\mathrm{ln}\sigma+C$$

wherein F is the fracture probability determined by the symmetric sample cumulative distribution method, σ is the single fiber tensile strength (MPa), m is the Weibull shape parameter, and C is the constant. A Weibull plot of lnln{1/(1-F)} and lnσ was performed, and the Weibull shape parameter m was obtained from the first order approximated inclination.

Residual carbon content

The amount of the residual carbon component in the regenerated carbon fibers was determined by the thermogravimetric analysis (TGA method) as follows:

(i)For a 4 mg of sample piece obtained by pulverizing regenerated carbon fibers, a thermogravimetric analysis was performed in a thermogravimetric analyzer for a period of about 600 minutes in total at air-supply rate of 0.2 L/min, heating rate of 5 °C./min and recording rate of 1/6s, wherein the analysis consisted of steps of: increasing the temperature from room temperature to 100°C., holding the temperature at 100°C. for 30 minutes, increasing the temperature from 100°C. to 400°C., and holding the temperature at 400°C. for 480 minutes,
(ii) in a graph plotting the weight loss rate to time, the inflection point of the slope was identified and the weight loss rate in the holding period at 100°C. was subtracted from the value of the weight loss in the inflection point, in order to calculate the amount of residual carbon.

From the regenerated carbon fiber described above, a spindle shaped carbon fiber aggregate was obtained by the method according to the present invention. Specifically, the regenerated carbon fibers were defibrated by a mixer, and then stirred and mixed with an aqueous dispersion of an epoxy-based resin as a binder using an stirring granulator, and the obtained spindle shaped precursors were dried in a dryer to obtain carbon fiber aggregates having a spindle shape. Incidentally, an epoxy resin of 2 % by weight was applied to the regenerated carbon fiber.
As a result of the measurement for the obtained spindle shaped carbon fiber aggregate in the same manner as in Example A1 of Invention 1a, the average length of the aggregate was 10.8 mm, the average maximum width of the aggregate was 1.4 mm, and the bulk density of the aggregate was 132 g/L. The aspect ratio of the aggregate was 7.7.

Thermoplastic resin

As the base thermoplastic resin, a polycarbonate resin (L1225WP, molecular weight: 218,000, manufactured by Teijin Limited) was used.

Production of carbon fiber-reinforced thermoplastic resin pellet

The polycarbonate, which is a thermoplastic resin, was supplied to a twin-screw kneading extruder, and the regenerated carbon fiber aggregate obtained above was supplied from a side feeder and dispersed in the polycarbonate resin serving as a base material, and pelletized, thereby obtaining a carbon-fiber-reinforced thermoplastic resin pellet according to Example C1.

The weight of the thermoplastic resin and the regenerated carbon fibers fed into the extruder was measured, and the fiber weight ratio (% by weight), i.e., (regenerated carbon fibers (g)/(regenerated carbon fibers (g) + thermoplastic resin (g)) × 100) of the pellet according to Example C1, was calculated.

From the obtained pellet, by using an injection molding machine (manufactured by Toshiba Machine Co., Ltd., 130T injection molding machine, cylinder temperature: 300°C., mold temperature: 100°C.), a dumbbell pieces of length 170 mm × width 10 mm × thickness 4 mm (molded articles according to Example C1) was molded.

The tensile strength, flexural strength, and flexural modulus of the obtained dumbbell pieces were 99 MPa, 142 MPa, and 7.2 GPa, respectively. Tensile strength, flexural strength, and flexural modulus were measured as follows.

Tensile strength

Using the above dumbbell piece, the tensile strength was measured in accordance with ISO527.

Flexural Strength

Using the above dumbbell piece, the flexural strength was measured according to ISO178.

Flexural modulus

Using the above dumbbell piece, the flexural modulus was measured in accordance with ISO178.

The average residual fiber length of the regenerated carbon fibers in the pellet was 348 $\mu$m, and the occurrence rate of single fibers of 300 $\mu$m or less was 36%. Measurement methods thereof are as follows.

Average residual fiber length

The average fiber length of regenerated carbon fibers in a carbon-fiber-reinforced thermoplastic resin pellet (average residual fiber length) was calculated as a number average value by measuring the fiber length of 300 single fibers using a microscope, after removing the matrix resin in the pellet by the sulfuric acid decomposition method and performing filtration.

Occurrence rate of single fibers of 300 $\mu$m or less

The occurrence rate of single fibers of 300$\mu$m or less was calculated by measuring the fiber length of the single fibers in the same manner as the measurement of the average fiber length above, and calculating the ratio of the number of single fibers of 300 $\mu$m or less.

The result of Example C1 is shown in Table 3 below.

Comparative Example C1 for Invention 2

In Comparative Example C1, regenerated carbon fibers having a residual carbon content of 7.1% by weight were used, which were obtained by a conventional thermal decomposition method without using a semiconductor. The single fiber tensile strength and the Weibull shape parameter could not be measured because the residual carbon content was more than 5% by weight.

In Comparative Example C1, a pellet and a dumbbell piece were produced and evaluated in the same manner as in Example C1, except that the regenerated carbon fibers in the form of chopped regenerated carbon fibers were fed to a twin-screw extruder without performing mixer process and without producing a carbon fiber aggregate. The result is shown in Table 3 below. The carbon fibers regenerated by the conventional thermal decomposition method (i.e., the chopped regenerated carbon fiber according to comparative Example C1) were bound by the residual carbide, and thus able to be supplied from the side feeder to the twin-screw kneading extruder.

Comparative Example C2 of Invention 2

In Comparative Example C2, a pellet and a dumbbell piece were produced and evaluated in the same manner as in Example C1, except that chopped fibers of commercially available virgin carbon fibers (HT C422, manufactured by Teijin Limited) were used instead of the regenerated carbon fibers.

The result is shown in Table 3 below. The physical properties of the virgin carbon fiber according to Comparative Example C2 were as shown in the following Table 3.

The molded article according to Example C1 exhibited excellent mechanical properties than the molded article according to Comparative Example C1. Without wishing to be bound by theory, the reason for this may be that the regenerated carbon fiber of Example C1 had a lower residual carbon content than the regenerated carbon fiber of Comparative Example C1, and therefore the better adhesion was obtained between the carbon fiber and the resin.

In addition, the molded article according to Example C1 exhibited mechanical properties equivalent to those of the molded article according to Comparative Example C2, although it contained regenerated carbon fibers. In Example C1, the occurrence rate of the single fibers which had been crushed to 300 $\mu$m or less was decreased to 36%, as compared with 55% in the case of the comparative example C2. It is considered that this is the reason why Example C1 showed high reinforcing effect for mechanical strength and mechanical properties equivalent to those of Comparative Example C2 which was formed of a virgin carbon fiber, despite the fact that a regenerated carbon fiber having a lower single fiber tensile strength was used. Without wishing to be bound by theory, with regard to the reason why the occurrence rate of the single fiber crushed to 300 $\mu$m or less was relatively low in Example C1, it may due to the fact that the regenerated carbon fiber used in Example C1 was regenerated by the thermal activation of semiconductors method and therefore the variation in the single fiber tensile strength is small and the Weibull shape parameter was relatively high (8.7), as compared with Comparative Example C2.

[Table 3]

Table 3

| | | | | Example C1 | Comp. Ex. C1 | Comp. Ex. C2 |
|---|---|---|---|---|---|---|
| Pellet | | Type of carbon fiber | - | Regenerated carbon fiber | Regenerated carbon fiber | Virgin carbon fiber |
| | | Manufacturing method of regenerated carbon fiber | - | Thermal Activation of Semi-Conductors method | Thermal decomposition (conventional) | - |
| | | Form of supplied carbon fibers | - | Spindle-shaped carbon fiber aggregate | Chopped fiber | Chopped fiber |
| | | Single fiber tenslie strength | GPa | 4.2 | - | 4.6 |
| | | Weibull shape parameter | - | 8.7 | - | 5.6 |
| | | Residula carbon | wt% | 0.3 | 7.1 | 0 |
| | | Thermoplastic resin | - | Polycarbonate resin | Polycarbonate resin | Polycarbonate resin |
| | | Molecular weight of thermoplastic resin | - | 218,000 | 218,000 | 219,000 |
| | | Weight percentage of fiber | wt% | 10.1 | 10.2 | 10.6 |
| | | Average residual fiber length | $\mu$m | 348 | 290 | 311 |
| | | Occurrence rate of 300 $\mu$m or less single fiber | % | 36 | 42 | 55 |
| Dumbbell | | Tensile strength | MPa | 99 | 76 | 97 |
| | | Flexural strength | MPa | 142 | 109 | 139 |
| | | Flexural modulus | GPa | 7.2 | 7.2 | 7.5 |

Reference Examples 1 to 3 and Reference Comparative Examples 1

In Reference Examples 1 to 3 and Reference Comparative Examples 1, a carbon-fiber-reinforced plastic (CFRP) plate as a plastic-containing material was subjected to a heat treatment, and plastic decomposition efficiency was evaluated.

Reference Example 1 (Ref. Ex 1)

Reference Example 1 was performed as follows.

Material provision and arrangement

Used as a semiconductor material was a carrier having a honeycomb structure, on the surface of which chromium oxide ($Cr_2O_3$, 99% or more of purity, manufactured by Junsei Chemical Co., LTD.) was applied. The carrier with the honeycomb structure was 13 cell /25 mm.
A CFRP plate was used as the plastic-containing material, wherein the content ratio of an epoxy resin in the CFRP plate was 41% by weight.
The internal volume of the furnace was 9 L. Inside the furnace, the CFRP plate was placed on the carrier carrying chromium oxide as the semiconductor material. The carrier and the CFRP plate were placed in contact with each other.
The surface temperature of the CFRP plate was measured by a sensor located within 5 mm from the surface of the CFRP plate.

Heat treatment

The internal temperature of the furnace was controlled via the output of a heater in the furnace, in order to increase the internal temperature of the furnace.

Before the surface temperature of the CFRP plate reaching 300°C, a mixed gas of air and nitrogen gas having an oxygen concentration of 6% by volume was introduced into the furnace. The introduction of the mixed gas into the furnace was performed by sucking the gas from a suction port provided in an upper portion of the furnace at a gas introduction rate of 70 L/min and allowing the mixed gas to flow in from a gas supply part provided in a lower portion of the furnace. The oxygen concentration in the furnace was measured by an oxygen monitor.

A heat treatment was performed for 30 minutes under the atmosphere which was controlled to an oxygen concentration of 6% by volume through the introduction of the mixed gas. During the heat treatment, the output of the heater in the furnace was adjusted in order to increase the surface temperature of the CFRP plate to a first surface temperature of 376°C.

Evaluation

The evaluation of plastic decomposition efficiency in the method according to Reference Example 1 was performed by calculating the weight reduction rate (wt%) from the difference between the weight of the CFRP plate prior to the heat treatment and the weight of the CFRP plate after the heat treatment. The result is shown in Table 4.

Reference Example 2 (Ref. Ex. 2)

In Reference Example 2, a heat treatment and evaluation were performed in the same manner as in Reference Example 1, except that the carrier and the CFRP plate were arranged in the furnace so that they are spaced apart from each other by 30 mm and that the surface temperature of the CFRP plate was increased to 377°C. during the heating treatment. The result is shown in Table 4.

Reference Example 3 (Ref. Ex. 3)

In Reference Example 3, a heat treatment and evaluation were performed in the same manner as in Reference Example 1 except that the heat treatment was performed for 60 minutes and that the surface temperature of the CFRP plate was increased to 371°C. during the heat treatment. The result is shown in Table 4.

Reference Comparative Example 1 (Ref.Comp.Ex.1)

In Reference Comparative Example 1, a heat treatment and evaluation were performed in the same manner as in Reference Example 1, except that a semiconductor material was not used and that the surface temperature of the CFRP plate was increased to 370°C. during the heat treatment. The result is shown in Table 4.

[Table 4]

Table 4

| | Semiconductor material | Distance between semiconductor material and CFRP plate (mm) | Oxygen Concentration (Vol %) | Surface temperature (°C) | Treatment time (min) | Weight reduction rate (wt%) |
|---|---|---|---|---|---|---|
| Ref. Ex.1 | yes | 0 (contact) | 6 | 300→376 | 30 | 15.0 |
| Ref. Ex.2 | yes | 30 | 6 | 300→377 | 30 | 13.7 |
| Ref. Ex.3 | yes | 0 (contact) | 6 | 300→371 | 60 | 16.3 |
| Ref.Comp.Ex.1 | no | - | 6 | 300→370 | 30 | 11.1 |

As can be seen in Table 4, Reference Examples 1 to 3, which were heated to the surface temperature of 371°C. to 377°C. in the presence of a semiconductor material and under the introduction of the low oxygen concentration gas having the oxygen concentration of 6% by volume, exhibited higher decomposition efficiency of the plastic-containing material, as compared with Reference Comparative Example 1 in which a semiconductor material was not used.

Incidentally, in Reference Example 3, although the treatment time was extended to 60 minutes, the increase in the weight loss rate was limited as compared with Reference Example 1 in which the treatment time was 30 minutes. As a reason for this, it is considered that the decomposition efficiency was reduced because the sample surface was covered with carbides during the heat treatment.

Reference Example 4 and Reference Comparative Example 2

Reference Example 4 (Ref. Ex. 4)

A treatment and evaluation of Reference Example 4 were performed in the same manner as in Reference Example 1, except that the heat treatment was performed for 60 minutes under the condition of 500°C. surface temperature. The result is shown in Table 5 below.

Reference Comparative Example 2 (Ref.Comp.Ex.2)

In Reference Comparative Example 2, a treatment and evaluation were performed in the same manner as in Reference Example 4, except that a semiconductor material was not used. The result is shown in Table 5 below.

[Table 5]

Table 5

| | Semiconductor material | Distance between semiconductor material and CFRP plate (mm) | Oxygen Concentration (Vol %) | Surface temperature (°C) | Treatment time (min) | Weight reduction rate (wt%) |
|---|---|---|---|---|---|---|
| Ref. Ex.4 | yes | 0 (contact) | 6 | 500 | 60 | 38.3 |
| Ref.Comp.Ex.2 | no | - | 6 | 500 | 60 | 32.3 |

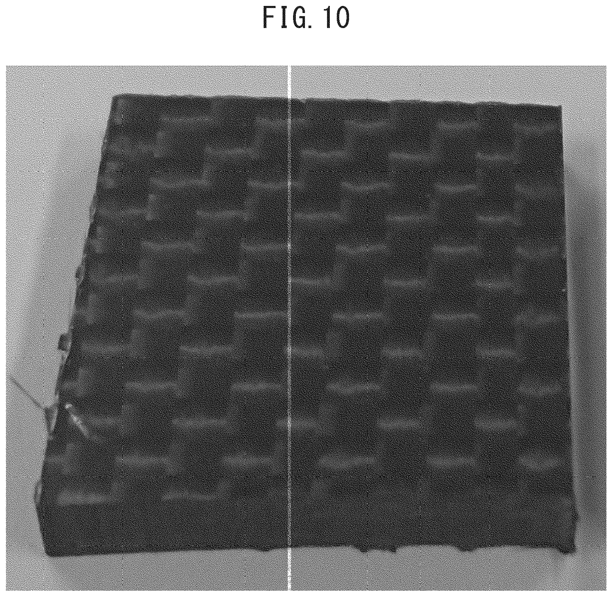

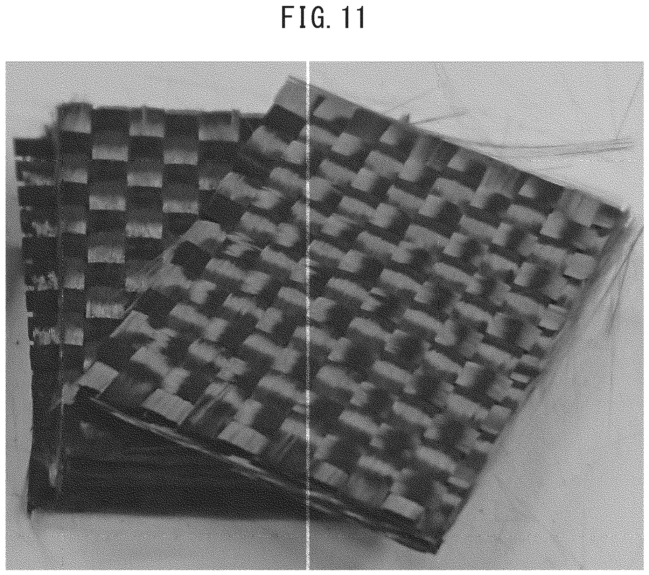

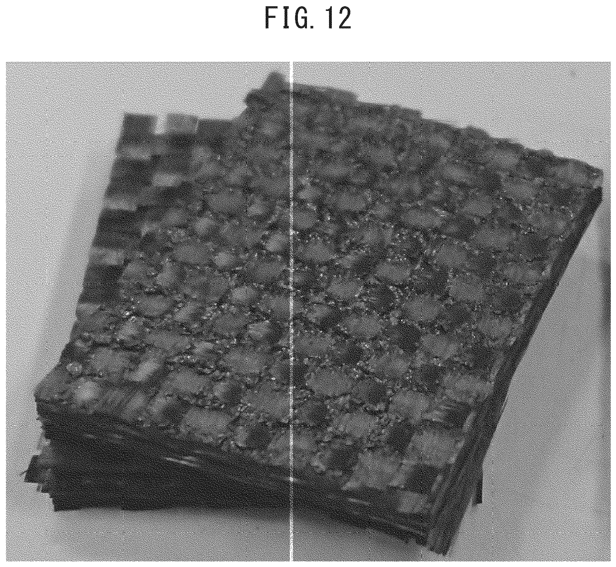

Photographs of the samples after the treatment according to Reference Example 4 and Reference Comparative Example 2 are shown in FIG. 11 and FIG.12, respectively. Further, a photograph of the sample before the treatment is shown in FIG. 10.

As can be seen in Table 5, Reference Example 4, in which the heat treatment was performed in the presence of a semiconductor material under the introduction of a low oxygen concentration gas having an oxygen concentration of 6% by volume, showed higher decomposition efficiency of plastic as compared with Comparative Example 2 in which the heat treatment was performed under the introduction of a low oxygen concentration gas having an oxygen concentration of 6% by volume without a semiconductor material.

Further, as can be seen in FIG. 12, on the surface of the sample after the treatment according to Reference Comparative Example 2, a residual carbon derived from a plastic was adhered in the form of a lump. On the other hand, as can be seen in FIG. 11, in the treated sample according to Reference Example 4, adhesion of such a residual carbon was not observed, and it had a relatively smooth and highly uniform surface as in the surface of a pre-treatment sample shown in FIG. 10.

Reference Examples 5 to 9

In Reference Examples 5 to 9, CFRP plates or pressure vessels as the plastic-containing materials were subjected to a two-stage heating. Then, the decomposition efficiency was evaluated, and the physical properties of the carbon fiber (the carbon fiber material) obtained by the heat treatment were evaluated.

Reference Example 5

Reference Example 5 was performed as follows.

Material provision and arrangement

Used as a semiconductor material was a carrier having a honeycomb structure on the surface of which chromium oxide ($Cr_2O_3$, 99% or more of purity, manufactured by Junsei Chemical Co., LTD.) was applied. The carrier having the honeycomb structure was 13 cell /25mm.

A CFRP plate was used as a plastic-containing material, wherein the content ratio of an epoxy resin in the CFRP plate was 41% by weight. The physical properties of the carbon fiber contained in the CFRP plate before the treatment are shown in Table 6 as Reference Example 1 (Ref.Ex.1).

The internal volume of the furnace was 0.0525 $m^3$. The CFRP plate was placed inside the furnace on the carrier carrying chromium oxide as the semiconducting material. The carrier and the CFRP plate were placed in contact with each other.

The surface temperature of the CFRP plate was measured by a sensor located within 5 mm from the surface of the CFRP plate.

Heat treatment

The internal temperature of the furnace was controlled via the output of a heater in the furnace, in order to increase the internal temperature of the furnace. Then, before the surface temperature of the CFRP plate reaches 300°C., a mixed gas of air and nitrogen gas having an oxygen concentration of 8% by volume was introduced into the furnace. The mixed gas was introduced into the furnace by sucking the mixed gas at a gas introduction rate of 190 L/min and allowing the mixed gas to flow in from a gas supply part provided in the furnace.

In Reference Example 5, as well as in Reference Example 6 and Reference Comparative Example 4 described below, the oxygen concentration in the furnace was measured by an oxygen monitor installed in the furnace. For Reference Examples 7 to 9, the oxygen concentration in the furnace was calculated based on the furnace internal volume and the gas introduction rate.

The generation of decomposition gas was detected when the surface temperature of the CFRP plate was 300°C.

A heat treatment was performed for 120 minutes in the atmosphere controlled to an oxygen concentration of 8% by volume through the introduction of the mixed gas. During the heat treatment, the output of the heater in the furnace was adjusted in order to increase the surface temperature of the CFRP plate to a first surface temperature of 450°C.

Secondary heat treatment

Then, while the gas suction pressure was maintained, the supply of the nitrogen gas was stopped, so that only the air was supplied; after it was confirmed that the oxygen concentration in the furnace reached 10% by volume or more, further heat treatment was performed. During the heat treatment for 260 minutes, the surface temperature of the CFRP plate was increased to 500°C. Incidentally, the average oxygen concentration over the period of 260 minutes was 14% by volume, and the maximum oxygen concentration was 18% by volume.

In Reference Example 5, the weight of the treated CFRP plate was 0.8 kg. The throughput with respect to the furnace internal volume was 15.2 kg/$m^3$.

Residual carbon content

The amount of a plastic-derived residual carbon in the carbon fibers (the regenerated carbon fibers) recovered after the heat treatment was determined by thermogravimetric analysis. The value of the residual carbon amount in Table 6 below represents the amount (wt%) of the residual carbon relative to the carbon fiber.

Thermogravimetric analysis was performed as follows:

    (i) For 1 to 4 mg of sample fragments obtained by pulverizing the recovered carbon fiber, thermogravimetric analysis was performed for a period of 300 minutes in a thermogravimetric analyzer under conditions of 0.2 L/min of air supply rate, 5°C./min of heating rate, and 1/6 s of recording rate, wherein the thermogravimetric analysis consisted of the steps of: raising the temperature from room temperature to 100°C., holding the temperature at 100°C. for 30 minutes, raising the temperature from 100°C. to 400°C., and holding the temperature at 400°C.,
    (ii) in a graph obtained by plotting weight loss rate against time, the inflection point of the slope was identified, and the amount of a residual carbon was calculated by subtracting the weight loss rate during the holding period at 100°C. from the value of the weight loss rate at the inflection point.

Further, for the carbon fiber recovered after the heat treatment, the diameter of the single fiber and the single fiber tensile strength were measured, and the Weibull shape parameter was calculated.

Single fiber tensile strength

The single fiber tensile strength was measured according to JIS R7606 as follows:

at least 30 single fibers were collected from a fiber bundle,
diameters of the single fibers were measured in a side-view image of the single fibers captured by a digital microscope, in order to calculate the cross-sectional area,
the sampled single fibers were fixed to a perforated mount paper using an adhesive,
the mount paper on which the single fiber was fixed was attached to a tensile tester, and a tensile test was performed at test length 10 mm and strain rate 1 mm/min, in order to measure the tensile fracture stress,
the tensile strength was calculated from the cross-sectional area of the single fiber and the tensile fracture stress, and
the average tensile strength of at least 30 single fibers was determined as the single fiber tensile strength.

Weibull shape parameter

The Weibull shape parameter was calculated according to the following formula:

$$\ln\ln\{1/(1-F)\}=m\times\ln\sigma+C$$

wherein F is the fracture probability determined by the symmetric sample cumulative distribution method, $\sigma$ is the single fiber tensile strength (MPa), m is the Weibull shape parameter, and C is the constant.

The Weibull plot of $\ln\ln\{1/(1-F)\}$ and $\ln\sigma$ was performed, and the Weibull shape parameter m was obtained from the first order approximated slope.

Evaluation results are shown in Table 6. The single fiber diameter is an average of the diameters of at least 30 single fibers measured as described above.

Reference Example 6

A treatment was carried out in the same manner as in Reference Example 5, except that a pressure vessel was used as a plastic-containing material, that the mixed gas was sucked at a gas introduction rate of 127 L/min, and that the oxygen concentration, the surface temperature, and the duration of the heat treatment were set as shown in Table 6 below.

The pressure vessel treated in Reference Example 6 had an aluminum liner and 44% by weight of FRP (fiber-reinforced plastic), and the FRP contained 31% by weight of reinforcing fiber and 13% by weight of epoxy resin. The reinforcing fibers were composed mainly of carbon fibers and contained a small amount of glass fibers. The capacity of the pressure vessel was 2.0 L.

The amount of the FRP treated in Reference Example 6 was 0.47 kg. The throughput with respect to the furnace internal volume was 9.0 kg/m$^3$.

The evaluation results of the plastic decomposition efficiency and the evaluation results of the physical properties of the recovered carbon fiber for Reference Example 6 are shown in Table 6. Incidentally, the average oxygen concentration over the course of 180 minutes of the secondary heat treatment was 18% by volume and the maximum oxygen concentration was 20% by volume.

The physical properties of carbon fibers contained in the pressure vessel prior to the treatment are shown in Table 6 as Reference 2 (Ref.2).

Reference Example 7

A heat treatment was carried out in the same manner as in Reference Example 5, except that the internal volume of the furnace was 0.1435 m$^3$, that a mixed gas of superheated steam and air was introduced into the furnace at a gas introduction rate of 29 L/min, and that the surface temperature and the duration of the heat treatment were set as shown in Table 6 below.

The internal temperature of the furnace and the surface temperature of the sample were controlled via the heater output of the furnace and the temperature of the superheated steam.

In Reference Example 7, the weight of the CFRP plate treated was 1.0 kg. The throughput with respect to the furnace internal volume was 7.0 kg/m$^3$.

The evaluation results of the plastic decomposition efficiency and the evaluation results of the physical properties of the recovered carbon fiber for Reference Example 7 are shown in Table 6. Incidentally, in the secondary heat treatment, only air was pushed into the furnace at 29 L/min.

Reference Example 8

A treatment was carried out in the same manner as in Reference Example 7, except that the pressure vessel was used as a plastic-containing material, and the surface temperature and the duration of the heat treatment were set as shown in Table 6 below.

The pressure vessel used in Reference Example 8 was the same as the pressure vessel used in Reference Example 6.

The amount of the FRP treated in Reference Examples 8 was 0.47 kg. The throughput with respect to the furnace internal volume was 3.3 kg/m$^3$.

The evaluation results of the plastic decomposition efficiency and the evaluation results of the physical properties of the recovered carbon fiber for Reference Example 8 are shown in Table 6. In the secondary heat treatment, only air was pushed into the furnace at a rate of 29 L/min.

Reference Example 9

A treatment was carried out in the same manner as in Reference Example 7, except that the internal volume of the furnace was 0.049 m$^3$, that a mixed gas of superheated steam and air was introduced into the furnace at a gas introduction rate of 25 L/min, and that the surface temperature and the duration of the heating treatment were set as shown in Table 6 below.

In Reference Example 9, the treated CFRP plate had an epoxy resin ratio of 38%. The throughput with respect to the furnace internal volume was 1.6 kg/m$^3$.

The evaluation results of the plastic decomposition efficiency and the evaluation results of the physical properties of the recovered carbon fiber for Reference Example 9 are shown in Table 6. Incidentally, in the secondary heat treatment, the amount of air was increased while the superheated steam was continuously supplied, and a gas having an oxygen concentration of 11% by volume was pushed into the furnace at 38 L/min.

The physical properties of a carbon fiber contained in the above-described CFRP plate according to Reference Example 9 prior to the treatment are shown in Table 6 as Reference 3 (Ref.3).

Reference Comparative example 3 (Ref.Comp.Ex.3)

In Reference Comparative Example 3, the material was provided and arranged in the same manner as in Reference Example 5, and thereafter, the internal temperature of the furnace was increased without adjusting the oxygen concentration of the atmosphere in the furnace.

As a consequence, while the heater output level was maintained at the level at which the surface temperature of the CFRP plate reached 300°C., excessive self-heating occurred, and the temperature of the surface of the CFRP plate reached 485°C. The results are shown in Table 6.

In Reference Comparative Example 3, the treated CFRP plate was 0.8 kg. The throughput with respect to the furnace internal volume was 15.2 kg/m$^3$.

Reference Comparative Example 4 (Ref.Comp.Ex.4)

A treatment was performed in the same manner as in Reference Example 6, except that a semiconductor material was not used.

The amount of the treated FRP in Reference Comparative Example 4 was 0.47kg. The throughput with respect to the furnace internal volume was 9.0 kg/m$^3$.

With regard to Reference Comparative Example 4, the evaluation result of the physical properties of the recovered carbon fiber is shown in Table 6. In the secondary heat treatment, the average oxygen concentration over the period of 180 minutes was 18% by volume and the maximum oxygen concentration was 20% by volume.

[Table 6]

Table 6

| No. | Plastic-containing material | Semiconductor material | Introduction of low oxygen concentration gas | | | Primary heat treatment | | Secondary heat treatment Decomposition efficiency | | | Physical properties | | |
|---|---|---|---|---|---|---|---|---|---|---|---|---|---|
| | | | Oxygen conc. (vol%) | Gas composition | Gas introduction rate (L/min) | Oxygen conc. in furnace (*2) (vol%) | Surface temperature /time | Oxygen conc. in furnace (vol %) | Surface temperature /time | residual carbon amount (wt %) | Single fiber diameter ($\mu$m) | Single fiber tensile strength (GPa) | Weibull shape parameter |
| Ref. Ex. 5 | CFRP plate | yes | 8 | Nitrogen /Air | 190 | 8 | 300°C→450°C /120min | ≧10 | 450°C-500°C /260min | 0.26 | 7.2 | 3.5 | 7.6 |
| Ref. Ex. 6 | Pressure vessel | yes | 6 | Nitrogen /Air | 127 | 6 | 300°C→480°C /150min | ≧10 | 480°C /180min | 0.21 | 7.4 | 3.7 | 9.2 |
| Ref. Ex. 7 | CFRP plate | yes | 6 | superheated steam /Air | 29 | 6 | 300°C→500°C /170min | 210 | 500°C /120min | 1.50 | 7.1 | 3.5 | 7.0 |
| Ref. Ex. 8 | Pressure vessel | yes | 6 | superheated steam /Air | 29 | 6 | 300°C→470°C /105min | ≧10 | 470°C /180min | 2.60 | 7.3 | 3.5 | 6.9 |
| Ref. Ex. 9 | CFRP plate | yes | 6 | superheated steam /Air | 25 | 6 | 300°C→500°C /20min | ≧10 | 500°C /180min | 1.89 | 6.7 | 5.0 | 8.5 |
| Ref.Comp.Ex.3 | CFRP plate | yes | 21 | - | - | 21 | (*1) | - | - | - | - | - | - |
| Ref.Comp.Ex.4 | Pressure vessel | no | 6 | Nitrogen /Air | 127 | 6 | 300°C→480°C /150min | ≧10 | 480°C /180min | - | 7.3 | 3.2 | 5.6 |
| Ref. 1 | CFRP plate | - | - | - | - | - | - | - | - | - | 7.4 | 3.7 | 4.6 |
| Ref. 2 | Pressure vessel | - | - | - | - | - | - | - | - | - | 7.6 | 4.1 | 5.0 |
| Ref. 3 | CFRP plate | - | - | - | - | - | - | - | - | - | 6.7 | 5.4 | 4.9 |

(*1) Decomposed gas was detected after the temperature was raised to 300 °C, but due to the self heating, the temperature reached 485°C without further raising the heater output.
(*2) With regard to Examples 7 to 9 , oxygen concentrations (oxygen conc.) in the furnace described are based on the internal volume of the furnace and the gas introduction rate.

47

In Reference Examples 5 to 9, a low oxygen concentration gas having an oxygen concentration of 6 to 8% by volume was introduced, a primary heat treatment was performed in the presence of a semiconductor material, and a secondary heat treatment was further performed under an increased oxygen concentration. As can be seen in Table 6, in these Examples, the residue carbon content (the content of the residual carbon component) was low and excellent plastic decomposition efficiency was observed.

Further, in Reference Comparative Example 3 in which the oxygen concentration was not controlled, excessive self-heating occurred. On the other hand, excessive self-heating was not observed in Reference Examples 5 to 9 in which a low oxygen concentration gas having an oxygen concentration of 6 to 8% by volume was introduced into the furnace. It is considered that in Reference Comparative Example 3, since the decomposition treatment was initiated without reducing the oxygen concentration in advance, the oxygen concentration became excessive, and as a result, it was not possible to suitably control the decomposition temperature in the presence of a semiconductor material.

Furthermore, the carbon fibers recovered in Reference Examples 5 to 9 had the single fiber diameter and single fiber tensile strength comparable to the carbon fiber prior to the treatment (References 1 to 3), and had higher Weibull shape parameter with regard to the single fiber tensile strength. Therefore, in Reference Examples 5 to 9, the recovered carbon fiber had excellent physical properties than a carbon fiber before being used for the production of the carbon-fiber-reinforced plastic.

Furthermore, the carbon fiber recovered in Reference Example 6 which was subjected to a heat treatment with a semiconductor material exhibited superior quality, in particular in terms of the single fiber tensile strength and Weibull shape parameter, as compared with the carbon fiber recovered in Reference Comparative Examples 4 which was subjected to a heat treatment without a semiconductor material.

Reference Signs List

| 100 | stirring granulator |
| 120 | container |
| 140 | agitation blade |
| 160 | shaft portion |
| A | rotation direction |
| C | clearance |
| 11 | semiconductor material |
| 12 | plastic-containing material |
| 20 | furnace |
| 21 | carrier having semiconductor material |
| 22 | plastic-containing material |
| 23 | heat source (heater) |
| 24 | gas supply part |
| 25 | exhaust outlet |
| 26 | inner space of furnace |
| 27 | temperature sensor |

**Claims**

1. A method for producing a spindle-shaped carbon fiber aggregate, comprising:

   providing a mixture at least composed of regenerated carbon fibers and a binder-containing liquid;
   making the mixture tumble in a container (120) in a clearance (C) between the inner wall of the container and a rotating body (140) in the container, in order to form a spindle-shaped precursor; and
   drying the precursor;
   wherein the regenerated carbon fibers contain a residual carbon component, and a content of the residual carbon component is more than 0% by weight and 5.0% by weight or less based on the regenerated carbon fibers,
   wherein the average length of the regenerated carbon fibers is 1 mm or more and less than 30 mm
   and wherein the regenerated carbon fibers contained in the spindle-shaped carbon fiber aggregate are oriented along the longitudinal axis direction of the spindle-shaped carbon fiber aggregate.

2. The method according to claim 1, wherein the average length of the regenerated carbon fiber aggregate is from 1.5 mm to 60 mm.

3.  The method according to claim 1 or 2, wherein the amount of the binder-containing liquid in the mixture is from 20% by weight to 60% by weight, based on the mixture.

4.  The method according to any one of claims 1 to 3, wherein the amount of the binder contained in the binder-containing liquid is from 0.1 % by weight to 10 % by weight, based on the regenerated carbon fibers.

5.  The method according to any one of claims 1 to 4, wherein the average length of the carbon fiber aggregate is 1.2 to 4.0 times the average length of the regenerated carbon fibers contained in the carbon fiber aggregate.

6.  The method for producing a spindle-shaped carbon fiber aggregate according to claim 1, wherein

    the spindle-shaped aggregate is a spindle-shaped aggregate of thermoplastic resin fibers and regenerated carbon fibers, and
    the mixture further contains thermoplastic resin fibers.

7.  The method according to any one of claims 1 to 5, comprising:
    decomposing a plastic component contained in a carbon-fiber-containing plastic article by the thermal activation of semiconductors method, in order to produce the regenerated carbon fiber.

8.  A spindle-shaped carbon fiber aggregate at least composed of regenerated carbon fibers and a binder, **characterized in that**

    the regenerated carbon fibers contain a residual carbon component, and the residual carbon component is more than 0 % by weight and 5.0 % by weight or less, based on the regenerated carbon fibers,
    the average length of the regenerated carbon fibers is 1 mm or more and less than 30 mm,
    the average length of the carbon fiber aggregate is from 1.5 mm to 60 mm, and
    the regenerated carbon fibers contained in the spindle-shaped carbon fiber aggregate are oriented along the longitudinal axis direction of the spindle-shaped carbon fiber aggregate.

9.  The carbon fiber aggregate according to claim 8, wherein the average length of the spindle-shaped carbon fiber aggregate along the longitudinal axis direction is 1.2 times to 4.0 times the average length of the regenerated carbon fibers contained in the spindle-shaped carbon fiber aggregate.

10. The spindle-shaped carbon fiber aggregate according to claim 8, wherein

    the spindle-shaped aggregate is a spindle-shaped aggregate of thermoplastic resin fibers and carbon fibers comprising regenerated carbon fibers, thermoplastic resin fibers and a binder, and
    the carbon fibers and thermoplastic resin fibers contained in the aggregate are oriented along the longitudinal axis direction of the aggregate.

11. The carbon fiber aggregate according to claim 10, wherein the average length of the aggregate is from 1.5 mm to 60 mm.

12. The carbon fiber aggregate according to claim 10 or 11, wherein the average length of the regenerated carbon fibers and the average length of the thermoplastic resin fibers are 1 mm or more and less than 30 mm, respectively.

13. The carbon fiber aggregate according to any one of claims 10 to 12, wherein the average length of the aggregate is 1.2 to 5.0 times the average length of the regenerated carbon fibers and the average length of the thermoplastic resin fibers contained in the aggregate.

14. The carbon fiber aggregate according to any one of claims 8 to 13, wherein the content of the binder is from 0.1 % by weight to 10 % by weight, based on the spindle-shaped aggregate.

15. The carbon fiber aggregate according to any one of claims 10 to 14, wherein the thermoplastic resin fibers are selected from polyolefin resin fibers, polyester resin fibers, polyamide resin fibers, polyetherketone resin fibers, polycarbonate resin fibers, phenoxy resin fibers, and polyphenylene sulfide resin fibers, and mixtures thereof.

**Patentansprüche**

1. Verfahren zur Herstellung eines spindelförmigen Kohlenstofffaseraggregats, umfassend:

   Bereitstellen eines Gemisch, das wenigstens aus regenerierten Kohlenstofffasern und einer bindemittelhaltigen Flüssigkeit besteht;
   Trommeln des Gemischs in einem Behälter (120) in einem Zwischenraum (C) zwischen der Innenwand des Behälters und einem Drehkörper (140) in dem Behälter, um einen spindelförmigen Vorläufer zu bilden; und
   Trocknen des Vorläufers;
   wobei die regenerierten Kohlenstofffasern eine Restkohlenstoffkomponente enthalten und ein Gehalt an der Restkohlenstoffkomponente mehr als 0 Gew.-% und 5,0 Gew.-% oder weniger, bezogen auf die regenerierten Kohlenstofffasern, beträgt,
   wobei die mittlere Länge der regenerierten Kohlenstofffasern 1 mm oder mehr und weniger als 30 mm beträgt und wobei die in dem spindelförmigen Kohlenstofffaseraggregat enthaltenen regenerierten Kohlenstofffasern entlang der Längsachsenrichtung des spindelförmigen Kohlenstofffaseraggregats orientiert sind.

2. Verfahren nach Anspruch 1, wobei die mittlere Länge des Regenerierte-Kohlenstofffaser-Aggregats von 1,5 mm bis 60 mm beträgt.

3. Verfahren nach Anspruch 1 oder 2, wobei die Menge der bindemittelhaltigen Flüssigkeit in dem Gemisch von 20 Gew.-% bis 60 Gew.-%, bezogen auf das Gemisch, beträgt.

4. Verfahren nach einem der Ansprüche 1 bis 3, wobei die Menge des in der bindemittelhaltigen Flüssigkeit enthaltenen Bindemittels von 0,1 Gew.-% bis 10 Gew.-%, bezogen auf die regenerierten Kohlenstofffasern, beträgt.

5. Verfahren nach einem der Ansprüche 1 bis 4, wobei die mittlere Länge des Kohlenstofffaseraggregats 1,2- bis 4,0-mal der mittleren Länge der in dem Kohlenstofffaseraggregat enthaltenen regenerierten Kohlenstofffasern beträgt.

6. Verfahren zur Herstellung eines spindelförmigen Kohlenstofffaseraggregats nach Anspruch 1, wobei

   das spindelförmige Aggregat ein spindelförmiges Aggregat aus thermoplastischen Harzfasern und regenerierten Kohlenstofffasern ist und
   das Gemisch ferner thermoplastische Harzfasern enthält.

7. Verfahren nach einem der Ansprüche 1 bis 5, umfassend:
   Zersetzen einer Kunststoffkomponente, die in einem Kohlenstofffaser-enthaltenden Kunststoffgegenstand enthaltenen ist, durch thermische Aktivierung des Halbleiterverfahrens zur Herstellung der regenerierten Kohlenstofffaser.

8. Spindelförmiges Kohlenstofffaseraggregat, das wenigstens aus regenerierten Kohlenstofffasern und einem Bindemittel besteht,
   **dadurch gekennzeichnet, dass**

   die regenerierten Kohlenstofffasern eine Restkohlenstoffkomponente enthalten und die Restkohlenstoffkomponente mehr als 0 Gew.-% und 5,0 Gew.-% oder weniger, bezogen auf die regenerierten Kohlenstofffasern, beträgt;
   die mittlere Länge der regenerierten Kohlenstofffasern 1 mm oder mehr und weniger als 30 mm beträgt,
   die mittlere Länge des Kohlenstofffaseraggregats von 1,5 mm bis 60 mm beträgt, und
   die in dem spindelförmigen Kohlenstofffaseraggregat enthaltenen regenerierten Kohlenstofffasern entlang der Längsachsenrichtung des spindelförmigen Kohlenstofffaseraggregats orientiert sind.

9. Kohlenstofffaseraggregat nach Anspruch 8, wobei die mittlere Länge des spindelförmigen Kohlenstofffaseraggregats entlang der Längsachsenrichtung 1,2-mal bis 4,0-mal der mittleren Länge der regenerierten Kohlenstofffasern, die in dem spindelförmigen Kohlenstofffaseraggregat enthalten sind, beträgt.

10. Spindelförmiges Kohlenstofffaseraggregat nach Anspruch 8, wobei

    das spindelförmige Aggregat ein spindelförmiges Aggregat aus thermoplastischen Harzfasern und Kohlenstofffasern ist, umfassend regenerierte Kohlenstofffasern, thermoplastische Harzfasern und ein Bindemittel, und

die in dem Aggregat enthaltenen Kohlenstofffasern und thermoplastischen Harzfasern entlang der Längsachsenrichtung des Aggregats orientiert sind.

11. Kohlenstofffaseraggregat nach Anspruch 10, wobei die mittlere Länge des Aggregats von 1,5 mm bis 60 mm beträgt.

12. Kohlenstofffaseraggregat nach Anspruch 10 oder 11, wobei die mittlere Länge der regenerierten Kohlenstofffasern und die mittlere Länge der thermoplastischen Harzfasern 1 mm oder mehr bzw. weniger als 30 mm betragen.

13. Kohlenstofffaseraggregat nach einem der Ansprüche 10 bis 12, wobei die mittlere Länge des Aggregats 1,2-bis 5,0-mal der mittleren Länge der regenerierten Kohlenstofffasern und der mittleren Länge der thermoplastischen Harzfasern, die in dem Aggregat enthaltenen sind, beträgt.

14. Kohlenstofffaseraggregat nach einem der Ansprüche 8 bis 13, wobei der Gehalt an dem Bindemittel 0,1 Gew.-% bis 10 Gew.-%, bezogen auf das spindelförmige Aggregat, beträgt.

15. Kohlenstofffaseraggregat nach einem der Ansprüche 10 bis 14, wobei die thermoplastischen Harzfasern ausgewählt sind aus Polyolefinharzfasern, Polyesterharzfasern, Polyamidharzfasern, Polyetherketonharzfasern, Polycarbonatharzfasern, Phenoxyharzfasern und Polyphenylensulfidharzfasern und Gemischen davon.

**Revendications**

1. Procédé destiné à produire un agrégat de fibres de carbone en forme de fuseau, comprenant :

   l'obtention d'un mélange composé au moins de fibres de carbone régénérées et d'un liquide contenant un liant ;
   le culbutage du mélange dans un récipient (120) à l'intérieur d'un espace (C) entre la paroi interne du récipient et un corps rotatif (140) dans le récipient, afin de former un précurseur en forme de fuseau ; et
   le séchage du précurseur ;
   dans lequel les fibres de carbone régénérées contiennent un composant carboné résiduel, et une teneur du composant carboné résiduel est supérieure à 0 % en poids et inférieure ou égale à 5,0 % en poids, rapporté aux fibres de carbone régénérées,
   dans lequel la longueur moyenne des fibres de carbone régénérées est supérieure ou égale à 1 mm et inférieure à 30 mm,
   et dans lequel les fibres de carbone régénérées contenues dans l'agrégat de fibres de carbone en forme de fuseau sont orientées dans la direction de l'axe longitudinal de l'agrégat de fibres de carbone en forme de fuseau.

2. Procédé selon la revendication 1, dans lequel la longueur moyenne de l'agrégat de fibres de carbone régénérées est de 1,5 mm à 60 mm.

3. Procédé selon la revendication 1 ou 2, dans lequel la quantité du liquide contenant un liant dans le mélange est de 20 % en poids à 60 % en poids, rapporté au mélange.

4. Procédé selon l'une quelconque des revendications 1 à 3, dans lequel la quantité du liant contenu dans le liquide contenant un liant est de 0,1 % en poids à 10 % en poids, rapporté aux fibres de carbone régénérées.

5. Procédé selon l'une quelconque des revendications 1 à 4, dans lequel la longueur moyenne de l'agrégat de fibres de carbone représente 1,2 à 4,0 fois la longueur moyenne des fibres de carbone régénérées contenues dans l'agrégat de fibres de carbone.

6. Procédé destiné à produire un agrégat de fibres de carbone en forme de fuseau selon la revendication 1, dans lequel

   l'agrégat en forme de fuseau est un agrégat en forme de fuseau de fibres de résine thermoplastique et de fibres de carbone régénérées, et
   le mélange contient en outre des fibres de résine thermoplastique.

7. Procédé selon l'une quelconque des revendications 1 à 5, comprenant :
   la décomposition d'un composant plastique contenu dans un article en plastique contenant des fibres de carbone par le procédé d'activation thermique de semiconducteurs, afin de produire la fibre de carbone régénérée.

**8.** Agrégat de fibres de carbone en forme de fuseau composé au moins de fibres de carbone régénérées et d'un liant, **caractérisé en ce que**

les fibres de carbone régénérées contiennent un composant carboné résiduel, et le composant carboné résiduel représente plus de 0 % en poids et 5,0 % en poids ou moins, rapporté aux fibres de carbone régénérées, la longueur moyenne des fibres de carbone régénérées est supérieure ou égale à 1 mm et inférieure à 30 mm, la longueur moyenne de l'agrégat de fibres de carbone est de 1,5 mm à 60 mm, et les fibres de carbone régénérées contenues dans l'agrégat de fibres de carbone en forme de fuseau sont orientées dans la direction de l'axe longitudinal de l'agrégat de fibres de carbone en forme de fuseau.

**9.** Agrégat de fibres de carbone selon la revendication 8, la longueur moyenne de l'agrégat de fibres de carbone en forme de fuseau dans la direction de l'axe longitudinal représentant 1,2 fois à 4,0 fois la longueur moyenne des fibres de carbone régénérées contenues dans l'agrégat de fibres de carbone en forme de fuseau.

**10.** Agrégat de fibres de carbone en forme de fuseau selon la revendication 8,

l'agrégat en forme de fuseau étant un agrégat en forme de fuseau de fibres de résine thermoplastique et de fibres de carbone comprenant des fibres de carbone régénérées, des fibres de résine thermoplastique et un liant, et les fibres de carbone et les fibres de résine thermoplastique contenues dans l'agrégat étant orientées dans la direction de l'axe longitudinal de l'agrégat.

**11.** Agrégat de fibres de carbone selon la revendication 10, la longueur moyenne de l'agrégat étant de 1,5 mm à 60 mm.

**12.** Agrégat de fibres de carbone selon la revendication 10 ou 11, dans lequel la longueur moyenne des fibres de carbone régénérées et la longueur moyenne des fibres de résine thermoplastique sont respectivement supérieures ou égales à 1 mm et inférieures à 30 mm.

**13.** Agrégat de fibres de carbone selon l'une quelconque des revendications 10 à 12, la longueur moyenne de l'agrégat représentant 1,2 à 5,0 fois la longueur moyenne des fibres de carbone régénérées et la longueur moyenne des fibres de résine thermoplastique contenues dans l'agrégat.

**14.** Agrégat de fibres de carbone selon l'une quelconque des revendications 8 à 13, dans lequel la teneur du liant est de 0,1 % en poids à 10 % en poids, rapporté à l'agrégat en forme de fuseau.

**15.** Agrégat de fibres de carbone selon l'une quelconque des revendications 10 à 14, dans lequel les fibres de résine thermoplastique sont choisies parmi les fibres de résine polyoléfinique, les fibres de résine de polyester, les fibres de résine de polyamide, les fibres de résine de polyéthercétone, les fibres de résine de polycarbonate, les fibres de résine phénoxy et les fibres de résine de polysulfure de phénylène, et les mélanges de celles-ci.

FIG. 1

FIG. 2

# FIG. 3

# FIG. 4

FIG. 5

FIG. 6

# FIG. 7

# FIG. 8

FIG. 9

FIG. 10

FIG. 11

# FIG. 12

**EP 4 316 766 B1**

**Patent documents cited in the description**

- WO 3452363 A
- EP 2902433 A
- JP 2020180421 A
- JP 2020196882 A
- US 2019112228 A1
- JP 2020049820 A
- JP 2019155634 A
- JP 2021055198 A
- JP 4517146 B
- JP 2019189674 A